# EUROPEAN PATENT APPLICATION

(11) **EP 4 011 594 A1**
(43) Date of publication of application: **15.06.2022**
(21) Application number: 20852518.8
(22) Date of filing: 04.08.2020
(51) Int. Cl.: B29C 45/18, B29C 45/78, C08K 7/02, C08L 23/12, C08L 67/00, C08J 5/04, B29C 70/06, B29C 70/28, C08K 3/40

(54) **INJECTION MOLDED PRODUCT**

(30) Priority: 09.08.2019 JP 2019148156
(71) Applicant: SUMITOMO CHEMICAL COMPANY LIMITED, Tokyo 103-6020 (JP)
(72) Inventor: SUGIYAMA Takayuki, Tsukuba-shi, Ibaraki 300-3294 (JP); TAMURA Tasuku, Tsukuba-shi, Ibaraki 300-3294 (JP)
(74) Representative: Vossius & Partner Patentanwälte Rechtsanwälte mbB
(86) International application number: PCT/JP2020/029800
(87) International publication number: WO 2021/029276

(57) **Abstract**

The present invention relates to an injection molded product including a thermoplastic resin and a fibrous filler, wherein the thermoplastic resin includes at least 10% by mass of at least one selected from the group consisting of polypropylene and liquid crystal polyesters based on the total amount of the thermoplastic resin, the proportion of the fibrous filler having a fiber length of 1 mm or less in the injection molded product is 40% by mass or less based on the total amount of the fibrous filler, and a vertical-horizontal plane area of a test piece after ashing, which is determined by a specific ashing test, is at least 3.5 times the vertical-horizontal plane area of the test piece before ashing.

## Description

### TECHNICAL FIELD

The present invention relates to an injection molded article.

The present invention claims priority on the basis of Japanese Patent Application No. 2019-148156, filed in Japan on August 9, 2019, the contents of which are incorporated herein by reference.

### BACKGROUND OF THE INVENTION

In recent years, the weight of parts has been reduced with the aim of improving fuel efficiency in the field of transport equipment such as automobiles and aircraft. In order to reduce the weight of parts, the use of resin materials instead of conventionally-used metallic materials to form each part has been studied. For example, a vehicle that is lighter than a conventional vehicle can be obtained by using a thermoplastic resin as a molding material of a frame-based member, a suspension-based member or an impact-absorbing member in an automobile.

However, there has been a problem in that the mechanical properties of a molded article obtained from a molding material containing the above-mentioned thermoplastic resin are inferior to those of a molded article obtained from a metallic material.

In order to solve such a problem, a method of mixing fibers as a filler with a thermoplastic resin has been proposed to improve the strength of a molding material such as a thermoplastic resin composition (see, for example, Patent Document 1).

### DOCUMENTS OF RELATED ART

### Patent Documents

Patent Document 1: Japanese Unexamined Patent Application Publication No. 2005-298663

### SUMMARY OF THE INVENTION

### PROBLEMS TO BE SOLVED BY THE INVENTION

An additional decrease in the weight is required in the formation of molded articles which account for a large proportion of vehicle weight, such as frame-based members, suspension-based members, and impact-absorbing members of automobiles.

Securing the strength of molded articles with the additional decrease in the weight of molded articles has become a problem. For example, an impact-absorbing member of an automobile is required to be provided with the strength against an impact load from the viewpoint of safety of the vehicle at the time of collision.

However, molded articles obtained from conventional molding materials containing thermoplastic resins and fibers are not provided with the strength required against impact load.

The present invention has been made in view of such circumstances, and aims to provide an injection molded article in which the strength against an impact load is particularly enhanced.

### MEANS TO SOLVE THE PROBLEMS

In order to solve the above-mentioned problems, the present invention adopts the following constitution.

An embodiment of the present invention is an injection molded article containing a thermoplastic resin and fibrous fillers, in which the thermoplastic resin includes at least 10% by mass of at least one selected from the group consisting of polypropylenes and liquid crystalline polyesters, relative to the total amount of the thermoplastic resin, the ratio of fibrous fillers having a fiber length of 1 mm or less in the injection molded article relative to the total amount of the fibrous fillers is 40% by mass or less, and the vertical-horizontal plane area of a test piece after ashing in the "ashing test" described below is at least 3.5 times the vertical-horizontal plane area of the test piece before ashing.

### "Ashing test"

Step (1): A test piece having a vertical size of 10 mm and a horizontal size of 10 mm (the vertical-horizontal plane area of the test piece before ashing is 100 mm²) is cut from an injection molded article.

Step (2): The test piece is subjected to a heating treatment (ashing) to remove the resin component completely.

Step (3): The test piece after ashing is placed so that the vertical-horizontal plane of the test piece after ashing can correspond to the vertical-horizontal plane of the test piece before ashing to determine the vertical-horizontal plane area of the test piece after ashing using image analysis software.

It is preferable that the ratio of the fibrous fillers having a fiber length of more than 5 mm relative to the total amount of the fibrous fillers in the injection molded article of an embodiment of the present invention be at least 30% by mass.

It is preferable that the length-weighted average fiber length of the fibrous fillers in an injection molded article of an embodiment of the present invention be 4 mm or more.

It is preferable that an injection molded article of an embodiment of the present invention include: 40 parts by mass to 70 parts by mass of the thermoplastic resin; and 30 parts by mass to 60 parts by mass of the fibrous fillers.

It is preferable that the fibrous fillers in an injection molded article of an embodiment of the present invention be glass fibers.

### EFFECTS OF THE INVENTION

An injection molded article particularly having enhanced strength against an impact load can be provided according to an embodiment of the present invention.

### BRIEF DESCRIPTION OF DRAWINGS

Fig. 1 is diagram indicating test pieces after an ashing test by photographs of test pieces after ashing and binarized images of test pieces after ashing.
Fig. 2 is a schematic diagram indicating an aspect of a preparation device of a first pellet.

### EMBODIMENTS FOR CARRYING OUT THE INVENTION

### (Injection molded article)

An injection molded article of the present embodiment includes: a thermoplastic resin; and fibrous fillers.

In the injection molded article of the present embodiment, the ratio (mass ratio) of the thermoplastic resin to the fibrous fillers is preferably 40 parts by mass to 70 parts by mass of the thermoplastic resin to 30 parts by mass to 60 parts by mass of the fibrous fillers, more preferably 45 parts by mass to 70 parts by mass of the thermoplastic resin to 30 parts by mass to 55 parts by mass of the fibrous fillers, and even more preferably 45 to 65 parts by mass of the thermoplastic resin to 35 parts by mass to 55 parts by mass of the fibrous fillers.

In the injection molded article, the ratio of the thermoplastic resin is preferably 40% by mass to 70% by mass, more preferably 45% by mass to 70% by mass, and even more preferably 45% by mass to 65% by mass relative to 100% by mass of the injection molded article.

In the injection molded article, the ratio of the fibrous fillers is preferably 30% by mass to 60% by mass, more preferably 30% by mass to 55% by mass, and even more preferably 35% by mass to 55% by mass relative to 100% by mass of the injection molded article.

It is preferable that the ratio of the thermoplastic resin be 40% by mass to 70% by mass and the ratio of the fibrous fillers be 30% by mass to 60% by mass relative to 100% by mass of the injection molded article. It is more preferable that the ratio of the thermoplastic resin be 45% by mass to 70% by mass and the ratio of the fibrous fillers be 30% by mass to 55% by mass relative to 100% by mass of the injection molded article. It is even more preferable that the ratio of the thermoplastic resin be 45% by mass to 65% by mass and the ratio of the fibrous fillers be 35% by mass to 55% by mass relative to 100% by mass of the injection molded article.

When the ratio of the fibrous fillers is the lower limit or more of the above-mentioned preferable range, the effect of the improvement in the strength of the injection molded article by the fibrous fillers can be obtained. In contrast, when the ratio of the fibrous fillers is the upper limit or less of the above-mentioned preferable range, the fibrous fillers are easily dispersed in the thermoplastic resin, and fiber breakage due to collision between the fibers scarcely occurs during injection molding.

In the injection molded article of the present embodiment, the total amount of the thermoplastic resin and the fibrous fillers is preferably 80% by mass or more, more preferably 90% by mass or more, and even more preferably 95% by mass or more, and may be 100% by mass relative to the total amount (100% by mass) of the injection molded article.

### <Thermoplastic resin>

The injection molded article of the present embodiment contains at least one thermoplastic resin selected from the group consisting of polypropylenes and liquid crystalline polyesters (hereinafter, abbreviated as "resin (Tr1)").

Among the resins (Tr1), liquid crystalline polyesters are preferably used since they exhibit higher heat resistance and dimensional accuracy.

The liquid crystalline polyester contained in the injection molded article of the present embodiment is a polyester that exhibits liquid crystallinity in a molten state and is melted preferably at a temperature of 400°C or less.

The liquid crystalline polyester contained in the injection molded article of the present embodiment may be a liquid crystal polyesteramide, a liquid crystal polyester ether, a liquid crystal polyester carbonate, or a liquid crystal polyesterimide. It is preferable that the liquid crystalline polyester contained in the injection molded article of the present embodiment be a wholly aromatic liquid crystal polyester formed using only aromatic compounds as raw material monomers.

Typical examples of the liquid crystalline polyester contained in the injection molded article of the present embodiment include: ones obtained by polymerization (polycondensation) of an aromatic hydroxycarboxylic acid, an aromatic dicarboxylic acid, and at least one compound selected from the group consisting of aromatic diols, aromatic hydroxylamines, and aromatic diamines; ones obtained by polymerization of plural aromatic hydroxycarboxylic acids; ones obtained by polymerization of an aromatic dicarboxylic acid and at least one compound selected from the group consisting of aromatic diols, aromatic hydroxyamines and aromatic diamines; and ones obtained by polymerization of a polyester such as polyethylene terephthalate with an aromatic hydroxycarboxylic acid.

The aromatic hydroxycarboxylic acids, aromatic dicarboxylic acids, aromatic diols, aromatic hydroxyamines and aromatic diamines may be each independently replaced with polymerizable derivatives thereof in a part or in a whole thereof.

Examples of the polymerizable derivative of the compound having a carboxyl group such as an aromatic hydroxycarboxylic acid or an aromatic dicarboxylic acid include: ones (esters) obtained by replacing a carboxyl group with an alkoxycarbonyl group or an aryloxycarbonyl group; ones (acid halides) obtained by replacing a carboxyl group with a haloformyl group, and ones (acid anhydrides) obtained by replacing a carboxyl group with an acyloxycarbonyl group. Examples of the polymerizable derivative of the compound having a hydroxyl group such as an aromatic hydroxycarboxylic acid, an aromatic diol or an aromatic hydroxylamine include: ones (acylated products) obtained by acylating a hydroxyl group to an acyloxy group. Examples of the polymerizable derivative of the compound having an amino group such as an aromatic hydroxylamine and an aromatic diamine include ones (acylated products) obtained by acylating an amino group to an acylamino group.

The liquid crystalline polyester contained in the injection molded article of the present embodiment preferably has a repeating unit of the following formula (1) (hereinafter, may be abbreviated as "repeating unit (1)"), and more preferably has the repeating unit (1), a repeating unit of the following formula (2) (hereinafter, may be abbreviated as "repeating unit (2)") and a repeating unit of the following formula (3) (hereinafter, may be abbreviated as "repeating unit (3)").

-O-Ar¹- CO- (1)

-CO-Ar²- CO- (2)

-X- Ar³-Y- (3)

(Ar¹ is a phenylene group, a naphthylene group or a biphenylene group. Ar² and Ar³ are each independently a phenylene group, a naphthylene group, a biphenylene group or a group of formula (4). X and Y are each independently an oxygen atom or an imino group (-NH-). Any hydrogen atoms in Ar¹, Ar² or Ar³ may be each independently replaced with a halogen atom, an alkyl group or an aryl group.)

-Ar⁴-Z-Ar⁵- (4)

(Ar⁴ and Ar⁵ are each independently a phenylene group or a naphthylene group. Z is an oxygen atom, a sulfur atom, a carbonyl group, a sulfonyl group or an alkylidene group.)

Examples of the halogen atom include a fluorine atom, a chlorine atom, a bromine atom and an iodine atom. Examples of the alkyl group include a methyl group, an ethyl group, a n-propyl group, an isopropyl group, a n-butyl group, an isobutyl group, a s-butyl group, a t-butyl group, a n-hexyl group, a 2-ethylhexyl group, a n-octyl group and a n-decyl group, and the carbon number thereof is preferably 1 to 10. Examples of the aryl group include a phenyl group, an o-tolyl group, a m-tolyl group, a p-tolyl group, a 1-naphthyl group and a 2-naphthyl group, and the carbon number thereof is preferably 6 to 20.

When the hydrogen atoms are replaced with these groups, it is preferable that the number thereof per group of Ar¹, Ar² or Ar³ be each independently 2 or less, and it ismore preferable that the number thereof per group of Ar¹, Ar² or Ar³ be each independently 1 or less.

Examples of the alkylidene group include a methylene group, an ethylidene group, an isopropylidene group, a n-butylidene group and a 2-ethylhexylidene group, and the carbon number thereof is preferably 1 to 10.

The repeating unit (1) is a repeating unit derived from a predetermined aromatic hydroxycarboxylic acid. The repeating unit (1) is preferably a repeating unit (1) in which Ar¹ is a 1,4-phenylene group (a repeating unit derived from a p-hydroxybenzoic acid) or a repeating unit (1) in which Ar¹ is a 2,6-naphthylene group (a repeating unit derived from a 6-hydroxy-2-naphthoic acid).

In the present specification, the term "derived from" means that the chemical structure of a functional group contributing to polymerization of raw material monomers changes due to the polymerization, and other structural change does not occur.

The repeating unit (2) is a repeating unit derived from a predetermined aromatic dicarboxylic acid. The repeating unit (2) is preferably a repeating unit (2) in which Ar² is a 1,4-phenylene group (a repeating unit derived from a terephthalic acid), a repeating unit (2) in which Ar² is a 1,3-phenylene group (a repeating unit derived from an isophthalic acid), a repeating unit (2) in which Ar² is a 2,6-naphthylene group (a repeating unit derived from a 2,6-naphthalenedicarboxylic acid), or a repeating unit (2) in which Ar² is a diphenyl ether-4,4'-diyl group (a repeating unit derived from a diphenyl ether-4,4'-dicarboxylic acid).

The repeating unit (3) is a repeating unit derived from a predetermined aromatic diol, aromatic hydroxylamine or aromatic diamine. The repeating unit (3) is preferably a repeating unit (3) in which Ar³ is a 1,4-phenylene group (a repeating unit derived from a hydroquinone, a p-aminophenol or a p-phenylenediamine), or a repeating unit (3) in which Ar³ is a 4,4'-biphenylene group (a repeating unit derived from a 4,4'-dihydroxybiphenyl, a 4-amino-4'-hydroxybiphenyl or a 4,4'-diaminobiphenyl).

The amount of the repeating unit (1) relative to the total amount of all repeating units (sum of each amount (mol) of substance of each repeating unit, obtained by dividing each mass of each repeating unit constituting the liquid crystalline polyester by each formula weight of each repeating unit) is preferably 30% by mol or more, more preferably 30% by mol to 80% by mol, even more preferably 40% by mol to 70% by mol, and particularly preferably 45% by mol to 65% by mol.

The amount of the repeating unit (2) relative to the total amount of all repeating units is preferably 35% by mol or less, more preferably 10% by mol to 35% by mol, even more preferably 15% by mol to 30% by mol, and particularly preferably 17.5% by mol to 27.5% by mol.

The amount of the repeating unit (3) relative to the total amount of all repeating units is preferably 35% by mol or less, more preferably 10% by mol to 35% by mol, even more preferably 15% by mol to 30% by mol, and particularly preferably 17.5% by mol to 27.5% by mol.

The larger the amount of the repeating unit (1), the more easily improved the melt flowability, the heat resistance, and the strength/rigidity. However, an excessive amount of the repeating unit (1) readily increases the melt temperature, the melt viscosity, and the temperature required to conduct molding.

The ratio of the amount of the repeating unit (2) to the amount of the repeating unit (3), indicated by "the amount of the repeating unit (2)"/"the amount of the repeating unit (3)" (mol/mol), is preferably 0.9/1 to 1/0.9, more preferably 0.95/1 to 1/0.95, and even more preferably 0.98/1 to 1/0.98.

The liquid crystalline polyester contained in the injection molded article of the present embodiment may contain at least two of each of the repeating units (1) to (3) independently. Although the liquid crystalline polyester may contain repeating units other than the repeating units (1) to (3), the amount thereof is preferably 10% by mol or less, and more preferably 5% by mol or less relative to the total amount of all repeating units.

The liquid crystalline polyester contained in the injection molded article of the present embodiment preferably includes a repeating unit (3) in which both X and Y are oxygen atoms, namely a repeating unit derived from a predetermined aromatic diol, and more preferably includes only a repeating unit (3) in which both X and Y are oxygen atoms as the repeating unit (3)from the viewpoint that the melt viscosity is readily decreased.

It is preferable that the liquid crystalline polyester contained in the injection molded article of the present embodiment be produced by melt-polymerizing raw material monomers corresponding to the repeating units constituting the liquid crystalline polyester, followed by subjecting the resultant polymer (hereinafter may be referred to as "prepolymer") to solid phase polymerization. Thus, it becomes possible to produce a high-molecular liquid crystalline polyester having a high heat resistance and a high strength/rigidity with good handleability.

The melt polymerization may be carried out in the presence of a catalyst. Examples of the catalyst include: metal compounds such as magnesium acetate, stannous acetate, tetrabutyl titanate, lead acetate, sodium acetate, potassium acetate and antimony trioxide; and nitrogen-containing heterocyclic compounds such as 4-(dimethylamino)pyridine and 1-methylimidazole. Among them, nitrogen-containing heterocyclic compounds are preferably used.

The flow starting temperature of the liquid crystalline polyester contained in the injection molded article of the present embodiment is preferably 260°C or more, more preferably 260°C to 400°C, and even more preferably 260°C to 380°C.

The higher the flow starting temperature of the liquid crystalline polyester, the stronger the tendency of the liquid crystalline polyester to have improved heat resistance and strength. In contrast, when the flow starting temperature of the liquid crystalline polyester exceeds 400°C, the melt temperature and the melt viscosity of the liquid crystalline polyester tend to become high. Thus, the temperature required to conduct molding of the liquid crystalline polyester tends to become high.

In the present specification, the flow starting temperature of the liquid crystalline polyester is also referred to as flow temperature or fluidizing temperature, and is a temperature that gives an indication of the molecular weight of the liquid crystalline polyester (see "Liquid Crystal Polymers - Synthesis, Molding, and Applications -", edited by Naoyuki Koide, CMC Publishing Co., Ltd., Jun. 5, 1987, p 95).

The flow starting temperature is a temperature at which the viscosity reaches 4800 Pa·s (48000 poises) as measured by melting the liquid crystalline polyester while increasing the temperature thereof at a rate of 4°C/min under a load of 9.8 MPa (100 kg/cm²) to extrude the melted liquid crystalline polyester from a nozzle having an inner diameter of 1 mm and a length of 10 mm, using a capillary rheometer.

In the present embodiment, only one liquid crystalline polyester may be used alone, or at least two thereof may be used in combination.

When at least two liquid crystalline polyesters are used in combination, the flow starting temperatures thereof are preferably different from each other.

In the thermoplastic resin contained in the injection molded article of the present embodiment, the amount of the resin (Tr1) is 10% by mass or more, preferably 25% by mass or more, more preferably 50% by mass or more, even more preferably 75% by mass or more, and particularly preferably 90% by mass or more, and may be 100% by mass relative to the total amount (100% by mass) of the thermoplastic resin. In the injection molded article of the present embodiment, the amount of the resin (Tr1) is preferably 40% by mass to 70% by mass, more preferably 45% by mass to 65% by mass, and even more preferably 45 to 60% by mass relative to the total amount (100% by mass) of the injection molded article.

In addition to the resin (Tr1), the injection molded article of the present embodiment may further contain a thermoplastic resin other than the resin (Tr1).

Examples of the thermoplastic resin other than the resin (Tr1) include polyamides, polyesters other than liquid crystalline polyesters, polysulfones, polyethersulfones, polyphenylenesulfides, polyetherketones, polyetheretherketones, polycarbonates, polyphenylene ethers, and polyetherimides.

In the thermoplastic resin contained in the injection molded article of the present embodiment, the amount of the thermoplastic resin other than the resin (Tr1) is, for example, 0% by mass to 25% by mass, and may be 0% by mass to 10% by mass relative to the total amount (100% by mass) of the thermoplastic resin.

### <Fibrous fillers>

Fibrous fillers contained in the injection molded article of the present embodiment may be inorganic fibrous fillers or organic fibrous fillers.

Examples of the inorganic fibrous fillers include: glass fibers; carbon fibers such as PAN-based, pitch-based, rayon-based, phenol-based, and lignin-based carbon fibers; ceramic fibers such as silica fibers, alumina fibers, and silica alumina fibers; metal fibers, such as iron, gold, copper, aluminum, brass, or stainless steel fibers; silicon carbide fibers and boron fibers. Additional examples of the inorganic fibrous fillers include whiskers such as potassium titanate whiskers, barium titanate whiskers, wollastonite whiskers, aluminum borate whiskers, silicon nitride whiskers, and silicon carbide whiskers.

Examples of the organic fibrous fillers include polyester fibers, para- or meta-aramide fibers, and PBO fibers.

At least one type selected from the group consisting of carbon fibers such as PAN-based carbon fibers and pitch-based carbon fibers and glass fibers is more preferably contained as the fibrous fillers from the viewpoint of the abrasion load applied on a device during a molding process and the availability thereof. Alternatively, fibrous fillers coated with metal such as nickel, copper, or ytterbium may be used to impart conductivity.

The tensile strength of the carbon fibers is preferably 2000 MPa or more, more preferably 3000 MPa or more, and even more preferably 4000 MPa or more. In addition, the tensile elongation of the carbon fibers is preferably 0.5% or more, more preferably 1.0% or more, and even more preferably 1.8% or more. The use of carbon fibers having a high tensile strength and high tensile elongation as fibrous fillers suppresses the breakage of fibers during a forming process until a molded article is formed, and leaves the fibers long, thereby facilitating the achievement of the effects of the invention.

In particular, the PAN-based carbon fibers are preferably used from the viewpoint that the PAN-based carbon fibers realize a good balance among tensile strength, tensile elasticity, and tensile elongation, and make it possible to maintain the long length of the residual fibers.

The tensile strength, the tensile elasticity and the tensile elongation of carbon fibers are measured in accordance with JIS R 7606:2000.

Examples of the PAN-based carbon fibers include "TORAYCA (registered trademark)" manufactured by TORAY INDUSTRIES, INC., "PYROFIL (registered trademark)" manufactured by Mitsubishi Chemical Corporation, and "Tenax (registered trademark)" manufactured by TEIJIN LIMITED.

Examples of the pitch-based carbon fibers include "DIALEAD (registered trademark)" manufactured by Mitsubishi Chemical Corporation, "GRANOC (registered trademark)" manufactured by Nippon Graphite Fiber Co., Ltd., "DONACARBO (registered trademark)" manufactured by Osaka Gas Chemical Co., Ltd., and "KRECA (registered trademark)" manufactured by KUREHA CORPORATION.

Examples of the glass fibers include FRP reinforcing glass fibers such as E glass (namely, alkali-free glass), S glass or T glass (namely, high-strength and high-elastic glass), C glass (namely, acid-resistant glass), D glass (namely, low-permittivity glass), ECR glass (namely, substitute for E glass, the substitute being free from B₂O₃ and F₂), and AR glass (namely, alkali-resistant glass).

In the injection molded article of the present embodiment, glass fibers are preferably used as the fibrous fillers from the viewpoint of the balance between the impartation of the strength against an impact load and the degree of elasticity, and easy availability. Among these, E glass is particularly preferable.

### <Other components>

The injection molded article of the present embodiment may include, in addition to the thermoplastic resin and the fibrous fillers, at least one of other fillers and additives, as needed.

Examples of the other fillers include plate-shaped fillers, spherically-shaped fillers, and other granular fillers. The other fillers may be inorganic fillers or organic fillers.

Examples of the plate-shaped inorganic fillers include talc, mica, graphite, wollastonite, glass flake, barium sulfate, and calcium carbonate. Mica may be muscovite, phlogopite, fluorophlogopite, or tetrasilicic mica.

Examples of the granular inorganic fillers include silica, alumina, titanium oxide, glass beads, glass balloon, boron nitride, silicon carbide, and calcium carbonate.

Examples of the additives include measurement stabilizers, flame retardants, conductivity-imparting agents, crystal nucleating agents, ultraviolet absorbers, antioxidants, damping materials, antibacterial agents, insect repellent, deodorants, color protection agents, thermal stabilizers, release agents, antistatic agents, plasticizers, lubricants, colorants, pigments, dyes, foaming agents, antifoaming agents, viscosity modifiers, and surfactants.

### <Dispersion state of fibrous fillers in injection molded article>

The length-weighted average fiber length of the fibrous fillers in the injection molded article of the present embodiment is preferably 4 mm or more, more preferably 4.5 mm or more, and even more preferably 5 mm or more.

In contrast, the length-weighted average fiber length of the fibrous fillers is preferably less than 50 mm, more preferably 40 mm or less, even more preferably 20 mm or less, and particularly preferably 15 mm or less.

For example, the length-weighted average fiber length of the fibrous fillers is preferably 4 mm or more and less than 50 mm, more preferably 4.5 mm or more and 40 mm or less, even more preferably 5 mm or more and 20 mm or less, and particularly preferably 5 mm or more and 15 mm or less.

When the length-weighted average fiber length of the fibrous fillers is the lower limit or more of the above-mentioned preferable range, the strength against an impact load is further enhanced. In contrast, when the length-weighted average fiber length of the fibrous fillers is the upper limit or less of the above-mentioned preferable range, molding is further readily conducted.

In the present embodiment, the fiber length and the length-weighted average fiber length of the fibrous fillers in the injection molded article are measured as described below.

Step (1): A test piece having a width of 10 mm, a length of 30 mm and a thickness of 4 mm is cut from an injection molded article, and heated in a muffle furnace to remove the resin component.

For example, when the fibrous fillers are carbon fibers, heating is conducted at 500°C for 3 hours. When the fibrous fillers are glass fibers, heating is conducted at 600°C for 4 hours.

Step (2): The resultant obtained by removing the resin component from the injection molded article is dispersed in 1000 mL of an aqueous solution containing 0.05% by volume of a surfactant (Micro-90 manufactured by INTERNATIONAL PRODUCTS CORPORATION) to obtain a dispersion liquid.

Step (3): 100 mL is taken from the dispersion liquid, and diluted 5 to 20 times with pure water. A portion is taken from the diluted dispersion liquid, and fibers therein are observed with a microscope (VH-ZST (manufactured by KEYENCE CORPORATION) at a magnification of 20×) to take 10 images per sample without overlaps of taken areas.

When the fibrous fillers are carbon fibers, 50 mL is taken from the diluted dispersion liquid, and subjected to filtration under reduced pressure using a filter paper (No. 5C) for Kiriyama-rohto ϕ90 mm, and images of carbon fibers dispersed on the filter paper are taken.

When the fibrous fillers are glass fibers, 50 mL is taken from the diluted dispersion liquid, and then dispersed in a petri dish to take images of the glass fibers dispersed in the petri dish.

Step (4): The length of all fibers present in each taken image is measured by a measurement tool of the microscope. The length of bent fibers is measured by multiple-point measurement. The same procedure is repeated for the 10 taken images to measure the fiber length until the total number of measured fibers exceeds 500 fibers. When the total number of fibers in the 10 taken images does not exceed 500 fibers, step (3) is repeatedly conducted to appropriately adjust the dilution ratio with pure water, and images are taken again to remeasure the fiber length.

Step (5): The length-weighted average fiber length lm = (Σli² × ni) / (Σli × ni), (Σni > 500), is determined from the fiber length of the fibrous fillers measured in step (4).
li: Fiber length of fibrous fillers
ni: Number of fibrous fillers having a fiber length of li

In the injection molded article, the ratio of fibrous fillers having a fiber length of 1 mm or less is 40% by mass or less, preferably 30% by mass or less, more preferably 25% by mass or less, and even more preferably 20% by mass or less relative to the total amount (100% by mass) of the fibrous fillers in the injection molded article.

Although it is preferable that the ratio of fibrous fillers having a fiber length of 1 mm or less be small, the lower limit thereof is, for example, 1% by mass or more, or 2% by mass or more.

For example, the ratio of fibrous fillers having a fiber length of 1 mm or less is preferably 1% by mass to 30% by mass, more preferably 1% by mass to 25% by mass, even more preferably 1% by mass to 20% by mass, and particularly preferably 2% by mass to 20% by mass.

When the ratio of fibrous fillers having a fiber length of 1 mm or less is within the above-mentioned preferable range, the progression of cracking in a molded article when an impact is applied on the molded article is suppressed and the strength against an impact load is readily enhanced.

In the injection molded article of the present embodiment, the ratio of the fibrous fillers having a fiber length exceeding 5 mm is preferably 30% by mass or more, more preferably 35% by mass or more, even more preferably 40% by mass or more, and particularly preferably 45% by mass or more relative to the total amount (100% by mass) of the fibrous fillers in the injection molded article.

Although it is preferable that the ratio of the fibrous fillers having a fiber length exceeding 5 mm be large, the upper limit thereof is, for example, 90% by mass or less, or 80% by mass or less.

For example, the ratio of the fibrous fillers having a fiber length exceeding 5 mm is preferably 30% by mass to 90% by mass, more preferably 35% by mass to 90% by mass, even more preferably 40% by mass to 90% by mass, and particularly preferably 45% by mass to 80% by mass.

When the ratio of the fibrous fillers having a fiber length exceeding 5 mm is within the above-mentioned preferable range, the energy consumption due to the withdrawal of the fibrous fillers from the matrix resin is efficiently performed when an impact is applied on the molded article, and the strength against an impact load is readily enhanced.

In the injection molded article of the present embodiment, a vertical-horizontal plane area of a test piece after ashing in the "ashing test" described below is at least 3.5 times the vertical-horizontal plane area of the test piece before ashing.

### "Ashing test"

Step (1): A test piece having a vertical size of 10 mm and a horizontal size of 10 mm (the vertical-horizontal plane area of the test piece before ashing is 100 mm²) is cut from an injection molded article.

Step (2): The test piece is subjected to a heating treatment (ashing) to remove the resin component completely.

Step (3): The test piece after ashing is placed so that the vertical-horizontal plane of the test piece after ashing can correspond to the vertical-horizontal plane of the test piece before ashing to determine the vertical-horizontal plane area of the test piece after ashing using image analysis software.

In step (1), the thickness of the test piece before ashing is 5 mm or less. In the case where there is a portion having a thickness exceeding 5 mm in an injection molded article, a test piece having a vertical size of 10 mm and a horizontal size of 10 mm is cut therefrom, and then cut or polished such that the difference between the maximum thickness and the minimum thickness in the test piece becomes 0.5 mm or less.

Although the heating (ashing) temperature in step (2) depends on a material forming the injection molded article, the heating (ashing) temperature is, for example, preferably 450°C to 600°C when the material contains a polypropylene, or preferably 500°C to 600°C when the material contains a liquid crystalline polyester.

Image-processing software (WinROOF 2018, manufactured by MITANI. WORK) or image-processing software (LUZEX AP, manufactured by NIRECO) may be used as the image analysis software in step (3).

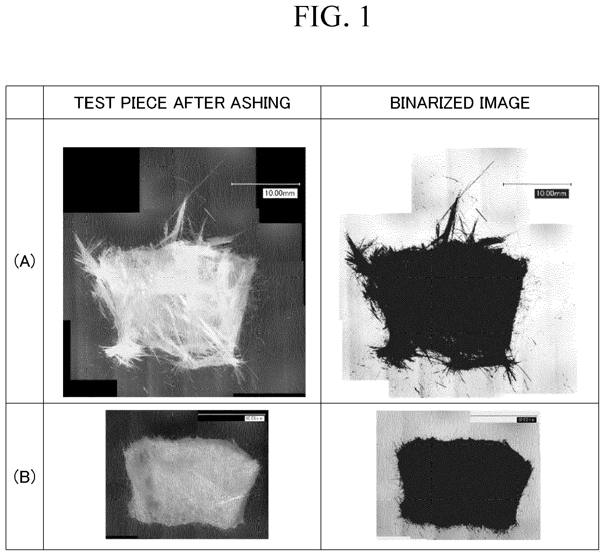

The vertical-horizontal plane area of the test piece after ashing is determined by binarizing with image analysis software to distinguish the fiber portions from the other portions (see FIG. 1).

FIG. 1 is a diagram showing photographs of the test pieces after ashing and binarized images of the test pieces after ashing.

Fig. 1(A) indicates the state of an injection molded article of the present embodiment in which the test piece after ashing contains fiber bundles. On the other hand, Fig. 1(B) indicates the state in which the test piece after ashing contains almost no fiber bundles.

In the injection molded article of the present embodiment, the vertical-horizontal plane area of a test piece after ashing in the "ashing test" relative to the vertical-horizontal plane area (100 mm²) of the test piece before ashing is 3.5 times or more, preferably 3.5 times to 10 times, more preferably 4.0 times to 10 times, and even more preferably 5.0 times to 10 times.

When the vertical-horizontal plane area of a test piece after ashing is at least 3.5 times the vertical-horizontal plane area of the test piece before ashing, the strength against an impact load of the injection molded article is particularly enhanced. In contrast, when the vertical-horizontal plane area of a test piece after ashing is the upper limit or less of the above-mentioned preferable range, an increase in the melt viscosity of the mixture of the thermoplastic resin and the fibrous fillers is suppressed, and the molding processability becomes favorable.

As mentioned above, the injection molded article of the present embodiment includes the thermoplastic resin and the fibrous fillers. In addition, the injection molded article of the present embodiment contains at least 10% by mass of at least one selected from the group consisting of polypropylenes and liquid crystalline polyesters, relative to the total amount of the thermoplastic resin. Namely, the polypropylene or the liquid crystalline polyester exhibits appropriate adhesion to the fibrous fillers in the present embodiment, and therefore cracking in the injection molded article tends to elongate in the longitudinal direction of the fibrous fillers (the direction along the interface between the fibrous fillers and the matrix resin) instead of the breaking direction of the fibrous fillers when an impact is applied to the injection molded article. It is presumed that the fibrous fillers are drawn out from the matrix resin while effectively consuming energy as the result, and therefore the strength against an impact load is enhanced. Furthermore, the ratio of the fibrous fillers having a fiber length of 1 mm or less in the injection molded article of the present embodiment relative to the total amount of the fibrous fillers is 40% by mass or less, and the vertical-horizontal plane area of a test piece after ashing in the "ashing test" is at least 3.5 times the vertical-horizontal plane area of the test piece before ashing. Namely, the fibrous fillers are not excessively opened and are appropriately dispersed in the state of fiber bundles in the injection molded article in the present embodiment. Since the fibrous fillers are appropriately present in the state of fiber bundles in the injection molded article, fiber breakage is suppressed. Therefore, it is presumed that the strength against an impact load of the injection molded article of the present embodiment is enhanced.

In contrast, the injection molded article in which the test piece after ashing contains almost no fiber bundle as shown in Fig. 1(B) has a small number of fiber bundles, and therefore the vertical-horizontal plane area of a test piece after ashing is unlikely to be at least 3.5 times the vertical-horizontal plane area of the test piece before ashing, fiber breakage in the injection molded article tends to proceed, and thus the strength thereof fails to reach a sufficient strength required for an impact-absorbing member for an automobile.

The injection molded article of the present invention has the following aspects.

(1) An injection molded article containing a thermoplastic resin and fibrous fillers, wherein the thermoplastic resin contains at least 10% by mass of at least one selected from the group consisting of polypropylenes and liquid crystalline polyesters, relative to the total amount of the thermoplastic resin, the ratio of fibrous fillers having a fiber length of 1 mm or less in the injection molded article relative to the total amount of the fibrous fillers is 40% by mass or less, and the vertical-horizontal plane area of a test piece after ashing in the "ashing test" described below is at least 3.5 times the vertical-horizontal plane area of the test piece before ashing.

### "Ashing test"

Step (1): A test piece having a vertical size of 10 mm and a horizontal size of 10 mm (the vertical-horizontal plane area of the test piece before ashing is 100 mm²) is cut from an injection molded article.

Step (2): The test piece is subjected to a heating treatment (ashing) to remove the resin component completely.

Step (3): The test piece after ashing is placed so that the vertical-horizontal plane of the test piece after ashing can correspond to the vertical-horizontal plane of the test piece before ashing to determine the vertical-horizontal plane area of the test piece after ashing using image analysis software.

(2) An injection molded article containing a thermoplastic resin and fibrous fillers, wherein the thermoplastic resin contains 50% by mass to 100% by mass of at least one selected from the group consisting of polypropylenes and liquid crystalline polyesters, relative to the total amount of the thermoplastic resin, the ratio of fibrous fillers having a fiber length of 1 mm or less in the injection molded article relative to the total amount of the fibrous fillers is 1% by mass to 30% by mass, and the vertical-horizontal plane area of a test piece after ashing in the "ashing test" relative to the vertical-horizontal plane area of the test piece before ashing is 3.5 times to 10 times.

(3) An injection molded article containing a thermoplastic resin and fibrous fillers, wherein the thermoplastic resin contains 75% by mass to 100% by mass of at least one selected from the group consisting of polypropylenes and liquid crystalline polyesters, relative to the total amount of the thermoplastic resin, the ratio of fibrous fillers having a fiber length of 1 mm or less in the injection molded article relative to the total amount of the fibrous fillers is 1% by mass to 25% by mass, and the vertical-horizontal plane area of a test piece after ashing in the "ashing test" relative to the vertical-horizontal plane area of the test piece before ashing is 4.0 times to 10 times.

(4) An injection molded article containing a thermoplastic resin and fibrous fillers, wherein the thermoplastic resin contains 90% by mass to 100% by mass of at least one selected from the group consisting of polypropylenes and liquid crystalline polyesters, relative to the total amount of the thermoplastic resin, the ratio of fibrous fillers having a fiber length of 1 mm or less in the injection molded article relative to the total amount of the fibrous fillers is 1% by mass to 20% by mass, and the vertical-horizontal plane area of a test piece after ashing in the "ashing test" relative to the vertical-horizontal plane area of the test piece before ashing is 5.0 times to 10 times.

(5) An injection molded article containing a thermoplastic resin and fibrous fillers, wherein the thermoplastic resin consists of liquid crystalline polyester, the ratio of fibrous fillers having a fiber length of 1 mm or less in the injection molded article relative to the total amount of the fibrous fillers is 3.0% by mass to 19.2% by mass, and the vertical-horizontal plane area of a test piece after ashing in the "ashing test" relative to the vertical-horizontal plane area of the test piece before ashing is 3.9 times to 9.5 times.

(6) The injection molded article according to any one of (1) to (5) mentioned above, wherein the vertical-horizontal plane area of a test piece after ashing in the "ashing test" relative to the vertical-horizontal plane area of the test piece before ashing is 3.5 times to 10 times, preferably 4.0 times to 10 times, more preferably 5.0 times to 10 times, and even more preferably 3.9 times to 9.5 times.

(7) The injection molded article according to any one of (1) to (6) mentioned above, wherein the thermoplastic resin contains 50% by mass to 100% by mass, preferably 75% by mass to 100% by mass, and even more preferably 90% by mass to 100% by mass, of at least one selected from the group consisting of polypropylenes and liquid crystalline polyesters, relative to the total amount of the thermoplastic resin.

(8) The injection molded article according to any one of (1) to (7) mentioned above, wherein the thermoplastic resin contains 10% by mass or more, preferably 50% by mass to 100% by mass, more preferably 75% by mass to 100% by mass, and even more preferably 90% by mass to 100% by mass, of liquid crystalline polyester, relative to the total amount of the thermoplastic resin.

(9) The injection molded article according to any one of (1) to (8) mentioned above, wherein the ratio of fibrous fillers having a fiber length of 1 mm or less in the injection molded article relative to the total amount of the fibrous fillers is 1% by mass to 30% by mass, preferably 1% by mass to 25% by mass, more preferably 1% by mass to 20% by mass, and even more preferably 2% by mass to 20% by mass.

(10) The injection molded article according to any one of (1) to (9) mentioned above, wherein the ratio of the fibrous fillers having a fiber length exceeding 5 mm in the injection molded article relative to the total amount of the fibrous fillers is 30% by mass or more.

(11) The injection molded article according to (10) mentioned above, wherein the ratio of the fibrous fillers having a fiber length exceeding 5 mm in the injection molded article relative to the total amount of the fibrous fillers is 30% by mass to 90% by mass, preferably 35% by mass to 90% by mass, more preferably 40% by mass to 90% by mass, and more preferably 45% by mass to 80% by mass.

(12) The injection molded article according to any one of (1) to (11) mentioned above, wherein the length-weighted average fiber length of the fibrous fillers is 4 mm or more.

(13) The injection molded article according to (12) mentioned above, wherein the length-weighted average fiber length of the fibrous fillers is 4 mm or more and less than 50 mm, preferably 4.5 mm or more and 40 mm or less, more preferably 5 mm or more and 20 mm or less, and even more preferably 5 mm or more and 15 mm or less.

(14) The injection molded article according to any one of (1) to (13) mentioned above, wherein 40 parts by mass to 70 parts by mass of the thermoplastic resin and 30 parts by mass to 60 parts by mass of the fibrous fillers are contained, preferably 45 parts by mass to 70 parts by mass of the thermoplastic resin and 30 parts by mass to 55 parts by mass of the fibrous fillers are contained, and more preferably 45 parts by mass to 65 parts by mass of the thermoplastic resin and 35 parts by mass to 55 parts by mass of the fibrous fillers are contained.

(15) The injection molded article according to any one of (1) to (14) mentioned above, wherein the ratio of the thermoplastic resin is 40% by mass to 70% by mass and the ratio of the fibrous fillers is 30% by mass to 60% by mass, relative to 100% by mass of the injection molded article.

(16) The injection molded article according to (15) mentioned above, wherein the ratio of the thermoplastic resin is 45% by mass to 70% by mass and the ratio of the fibrous fillers is 30% by mass to 55% by mass, relative to 100% by mass of the injection molded article.

(17) The injection molded article according to (16) mentioned above, wherein the ratio of the thermoplastic resin is 45% by mass to 65% by mass and the ratio of the fibrous fillers is 35% by mass to 55% by mass, relative to 100% by mass of the injection molded article.

(18) The injection molded article according to any one of (1) to (17) mentioned above, wherein the total amount of the thermoplastic resin and the fibrous fillers in the injection molded article relative to the total amount of the injection molded article is 80% by mass or more, preferably 90% by mass or more, more preferably 95% by mass or more, and even more preferably 100% by mass.

(19) The injection molded article according to any one of (1) to (18) mentioned above, wherein the fibrous fillers are glass fibers.

### <Preparation method of injection molded article>

The injection molded article of the above-mentioned embodiment can be prepared by mixing the thermoplastic resin and the fibrous fillers with other components as needed and then subjecting the resultant thermoplastic resin composition (molding material) to injection molding.

In the present specification, the mixture obtained by mixing the thermoplastic resin and the fibrous fillers is referred to as the "thermoplastic resin composition". In addition, the molding material obtained by making the resultant mixture in the form of pellets to be used to prepare an injection molded article is also referred to as the "thermoplastic resin composition".

One example of the preparation method of the above-mentioned injection molded article will be explained below.

The preparation method of an injection molded article of the present embodiment is a method of preparing the above-mentioned injection molded article, the method including: a step of obtaining a pellet mixture by mixing: a first pellet in which the above-mentioned fibrous fillers are impregnated with a first thermoplastic resin; and a second pellet which is free from fibrous fillers but contains a second thermoplastic resin having a flow starting temperature lower than that of the first thermoplastic resin; and a step of subjecting the pellet mixture to injection molding.

### [Step of obtaining pellet mixture]

In the step of obtaining a pellet mixture in the present embodiment, the first pellet and the second pellet are mixed to obtain the pellet mixture.

The first pellet is composed of a resin structure in which the fibrous fillers are impregnated with the first thermoplastic resin.

The first pellet may be obtained by, for example, subjecting the first thermoplastic resin and other components, as needed, to melt-kneading to obtain a melt, followed by impregnating the fibrous fillers with the melt to pelletize the resultant, and thus a pellet in which the fibrous fillers are hardened with the first thermoplastic resin is obtained.

Although examples of the shape of the first pellet include a columnar shape, a disk shape, an elliptical columnar shape, an elliptical disk shape, a Go stone shape, a spherical shape, and an indefinite shape, the shape is not limited to these. A cylindrical shape is more preferable from the viewpoint of productivity and handling at the time of molding.

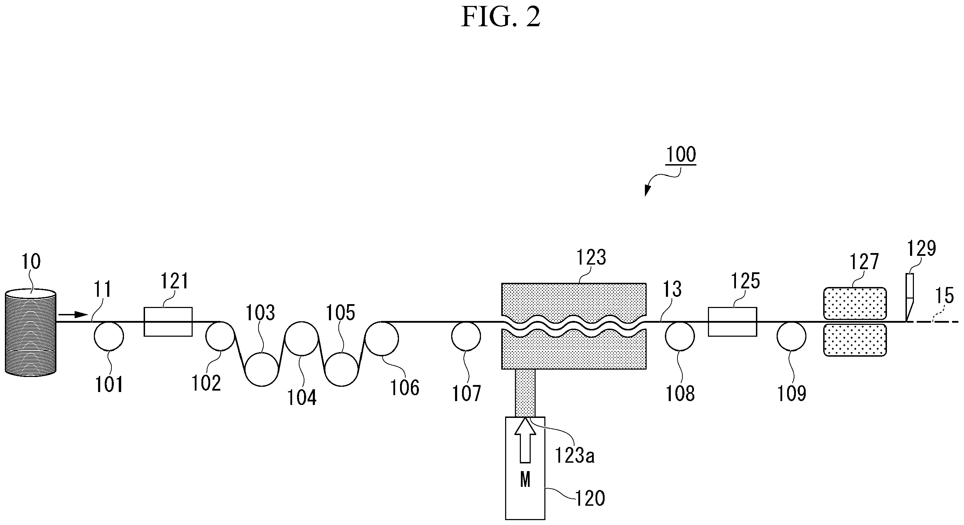

FIG. 2 shows one embodiment of a preparation device of the first pellet.

In the present embodiment shown in FIG. 2, the case in which pellets 15 formed from the first thermoplastic resin composition are obtained using a fiber roving 10 in which a fiber bundle 11 obtained by sizing a plurality of fibrous fillers with a sizing-agent is reeled into a roll will be described.

As shown in FIG. 2, a preparation device 100 includes: a preheating unit 121, an impregnation unit 123, a cooling unit 125, a taking-up unit 127, a cutting unit 129, and transfer rolls 101 to 109. In the preparation device 100 shown in FIG. 2, an extruder 120 is connected to the impregnation unit 123.

FIG. 2 shows the process in which the fiber bundle 11 is continuously reeled out from the fiber roving 10. In the present embodiment, the pellets 15 formed from the first thermoplastic resin composition are prepared while conveying the fiber bundle 11 reeled out from the fiber roving 10 in the longitudinal direction by the transfer rolls 101 to 109.

Although the fineness of the fiber roving 10 used to prepare the first pellet of the present embodiment is not particularly limited, the fineness is preferably 200 g / 1000 m or more, more preferably 500 g / 1000 m or more, and even more preferably 800 g / 1000 m or more. When the fineness of the fiber roving 10 is the lower limit or more of the above-mentioned preferable range, the fiber roving 10 can be readily handled in the preparation method of the first pellet.

The fineness of the fiber roving 10 is preferably 3750 g / 1000 m or less, more preferably 3200 g / 1000 m or less, and even more preferably 2500 g / 1000 m or less. When the fineness of the fiber roving 10 is the upper limit or less of the above-mentioned preferable range, the fibers are readily dispersed in the first thermoplastic resin, and the fibers are readily handled during the preparation of the first pellet.

Namely, the fineness of the fiber roving 10 is preferably 200 g / 1000 m to 3750 g / 1000 m, and more preferably 800 g / 1000 m to 2500 g / 1000 m.

Although the number-average fiber diameter of the fiber roving 10 is not particularly limited, the number-average fiber diameter is preferably 1 µm to 40 µm, and more preferably 3 µm to 35 µm.

When the fibrous fillers are carbon fibers, the number-average fiber diameter of the fiber roving 10 is preferably 1 µm to 15 µm, more preferably 3 µm to 10 µm, and even more preferably 4 µm to 9 µm.

When the fibrous fillers are glass fibers, the number-average fiber diameter of the fiber roving 10 is preferably 5 µm to 35 µm, more preferably 10 µm to 25 µm, and even more preferably 10 µm to 20 µm.

The number-average fiber diameter of the fiber roving 10 is the number-average value of values obtained by observing fibrous fillers with a scanning electron microscope (at a magnification of 1000×) and measuring fiber diameter of 500 fibrous fillers randomly selected.

When the number-average fiber diameter of the fiber roving 10 is the lower limit or more of the above-mentioned preferable range, the fibrous fillers are readily dispersed in the first pellet, and are readily handled during the preparation of the first pellet. In contrast, when where the number-average fiber diameter of the fiber roving 10 is the upper limit or less of the above-mentioned preferable range, a molded article is effectively reinforced by the fibrous fillers, and therefore excellent charpy impact strength can be imparted to the injection molded article of the present embodiment.

In the present embodiment, the fibrous fillers treated with a sizing-agent are used. The fibrous fillers that have been appropriately sized have excellent productivity and quality stability during the preparation of pellets, and can reduce variations in physical properties in molded articles.

Although the sizing-agent is not particularly limited, examples thereof include nylon-based polymers, polyether-based polymers, epoxy-based polymers, ester-based polymers, urethane-based polymers, mixed polymers thereof, and modified polymers thereof. In addition, a silane coupling agent such as aminosilane or epoxysilane, or a conventionally-known coupling agent such as a titanium coupling agent may also be used.

In the fibrous fillers used in the first pellet of the present embodiment, it is not necessarily required that single fibers be arranged in one direction, but it is preferable from the viewpoint of productivity in the process of preparing the molding material that single fibers be arranged in one direction and the fiber bundle be continuous in the length direction of the fibers.

When the fibrous fillers are glass fibers, the number of single threads in the fiber roving 10 is preferably 1000 to 10000, more preferably 1000 to 8000, and even more preferably 1500 to 6000 from the viewpoint of economic efficiency and improvement in impregnation efficiency.

When the fibrous fillers are carbon fibers, the number of single threads in the fiber roving 10 is preferably 10000 to 100000, more preferably 10000 to 50000, and even more preferably 10000 to 30000 from the same viewpoint as mentioned above.

The preheating unit 121 is configured to heat and dry the fiber bundle 11 reeled out from the fiber roving 10. Although the heating temperature therein is not particularly limited, the heating temperature is, for example, 50°C to 250°C. Although the heating time in the preheating unit 121 is not particularly limited, the heating time is, for example, 3 seconds to 30 seconds.

The impregnation unit 123 is configured to impregnate the fiber bundle 11 with a molding material M other than the fiber bundle 11 (the molding material M including the first thermoplastic resin and other components formulated as needed).

It is preferable as described below that the first thermoplastic resin be appropriately selected in view of the type of second thermoplastic resin, the melt viscosity, the flow starting temperature, and the like. Preferable examples of the first thermoplastic resin include liquid crystalline polyesters and polypropylenes.

One of the first thermoplastic resins may be used alone or at least two thereof may be used in combination.

The fiber bundle 11 may be impregnated with the melt obtained by supplying the molding material M from a supply port 123a into the impregnation unit 123 and then heating the molding material M in the impregnation unit 123, or may be impregnated with the molding material M by supplying the molding material M melt-kneaded by the extruder 120 from the supply port 123a.

In the embodiment shown in FIG. 2, the resin structure 13 in which the fiber bundle 11 is impregnated and coated with the melt is obtained.

The heating temperature in the impregnation unit 123 is appropriately determined depending on the type of first thermoplastic resin, and is preferably set to a temperature higher than the flow starting temperature of the used first thermoplastic resin by 10°C to 80°C, and, for example, is set to 300°C to 400°C.

In the impregnation unit 123, preferably 90 parts by mass to 250 parts by mass, more preferably 100 parts by mass to 240 parts by mass, and even more preferably 150 parts by mass to 220 parts by mass of the fibrous fillers (the fiber bundle 11) are impregnated with 100 parts by mass of the first thermoplastic resin, depending on the characteristics required for a molded article. When the formulation amount of the fibrous fillers is the lower limit or more of the above-mentioned preferable range, the injection molded article is effectively reinforced by the fibers. In contrast, when the formulation amount of the fibrous fillers is the upper limit or less of the above-mentioned preferable range, it becomes easy to open the fiber bundle and to impregnate the fiber bundle with the first thermoplastic resin.

The formulation ratio of the fibrous fillers to the first thermoplastic resin in the resin structure 13 may be adjusted by changing the nozzle diameter of a die head at an outlet of the impregnation unit 123 relative to the diameter of the fiber bundle 11.

The cooling unit 125 is configured to cool the resin structure 13 heated in the impregnation unit 123 (resin structure 13 in which the fiber bundle 11 is impregnated and coated with the melt) to 50°C to 150°C, for example. Although the cooling time is not particularly limited, the cooling time is 3 seconds to 30 seconds, for example.

The taking-up unit 127 is configured to continuously take up the resin structure 13 cooled in the cooling unit 125 to feed the resin structure 13 to the subsequent cutting unit 129.

The cutting unit 129 is configured to cut the cooled resin structure 13 to a desired length to obtain pellets 15. The cutting unit 129 is equipped with a rotary blade, for example.

The pellets in which fibrous fillers are hardened by the first thermoplastic resin are obtained as the first pellets of the present embodiment by using the above-mentioned preparation device 100 as described below, for example.

### Step of obtaining the resin structure:

First, a fiber bundle 11 is heated and dried in the preheating unit 121 while continuously reeling out the fiber bundle 11 in which a plurality of single fibers is sized by a sizing-agent from a fiber roving 10.

Then, the fiber bundle 11 is impregnated with a molding material M in a molten state by supplying the molding material M melt-kneaded by an extruder 120 from a supply port 123a while supplying the dried fiber bundle 11 to the impregnation unit 123. Thus, the resin structure 13 in which the fiber bundle 11 is impregnated and coated with the melt is obtained. Then, the resin structure 13 heated in the impregnation unit 123 is cooled in the cooling unit 125.

In the thus obtained resin structure 13, the fibers are arranged to be approximately parallel to the longitudinal direction of the resin structure 13.

The phrase "the fibers are arranged to be approximately parallel to the longitudinal direction of the resin structure" refers to the state in which the angle formed by the longitudinal direction of the fiber and the longitudinal direction of the resin structure is approximately 0°, and specifically the state in which angle formed by the longitudinal direction of the fiber and the longitudinal direction of the resin structure is approximately -5° to 5°.

### Step of obtaining pellets:

Next, the cooled resin structure 13 is taken up by a taking-up unit 127 in a strand shape, and fed to the cutting unit 129.

Then, the strand-shaped resin structure 13 is cut to a predetermined length in the longitudinal direction thereof in the cutting unit 129 to obtain pellets 15.

The term "predetermined length" of the pellets 15 refers to the length of the pellets 15, which is determined depending on the required performance of a molded article formed from the pellets 15. In the first pellet obtained in the preparation method of the present embodiment, the length of the pellet 15 and the length of the fibers arranged in the pellet 15 are substantially the same.

The phrase "the length of the pellet and the length of the fibers are substantially the same" means that the length-weighted average fiber length of the fibers arranged in the pellet is 95% to 105% of the length of the pellet in the longitudinal direction thereof.

Thus, the first pellets (pellets 15) in which the fibrous fillers are impregnated with the first thermoplastic resin are prepared.

In the pellet 15, the fibrous fillers are hardened with the first thermoplastic resin, and the fibrous fillers are arranged to be approximately parallel to the longitudinal direction of the pellet. The length of the fibrous filler arranged in the pellet 15 is substantially the same as the length of the pellet. Although the length of the pellets 15 prepared in the present embodiment depends on the required performance of a molded article formed from the pellets 15, the length is 3 mm to 50 mm, for example. The length of the pellet refers to the length of the pellet in the longitudinal direction thereof.

Thus, the fibrous fillers are arranged to be approximately parallel to the longitudinal direction of the pellet, and the length of the fibrous fillers is substantially the same as the length of the pellet, as a result of which, when the pellet is made into an injection molded article, the length of the fibrous fillers remaining in the injection molded article can be increased, which is effective in improving the heat resistance of the molded article and alleviating anisotropy.

The arrangement direction of the fibrous fillers in the pellet can be confirmed by observing the surface of a section of the pellet cut in the longitudinal direction with a microscope.

In the present embodiment, the fiber length and the length-weighted average fiber length of the fibrous fillers in the pellet are measured by the following steps.

Step (1): 2 g of the pellets are heated in a muffle furnace to remove the resin component (first thermoplastic resin).

For example, when the fibrous fillers are carbon fibers, heating is conducted at 500°C for 3 hours.

When the fibrous fillers are glass fibers, heating is conducted at 600°C for 4 hours.

Step (2): The resultant obtained by removing the resin component from the pellets is dispersed in 1000 mL of an aqueous solution containing 0.05% by volume of a surfactant (Micro-90 manufactured by INTERNATIONAL PRODUCTS CORPORATION) to obtain a dispersion liquid.

Step (3): 100 mL is taken from the dispersion liquid, and diluted 5 to 20 times with pure water. A portion is taken from the diluted dispersion liquid, and fibrous fillers therein are observed with a microscope (VH-ZST manufactured by KEYENCE CORPORATION at a magnification of 10× to 20×) to take 10 images per sample without overlaps of taken areas.

When the fibrous fillers are carbon fibers, 50 mL is taken from the diluted dispersion liquid, and subjected to filtration under reduced pressure using a filter paper (No. 5C) for Kiriyama-rohto ϕ90 mm, and images of carbon fibers dispersed on the filter paper are taken.

When the fibrous fillers are glass fibers, 50 mL is taken from the diluted dispersion liquid, and then dispersed in a petri dish to take images of the glass fibers dispersed in the petri dish.

Step (4): The length of all fibers present in each taken image is measured by a measurement tool of the microscope. The length of bent fibers is measured by multiple-point measurement and the length of fibers contacting with edges of the image is not measured. The same procedure is repeated for the 10 taken images to measure the fiber length until the total number of measured fibers exceeds 500 fibers. When the total number of fibers in the 10 taken images does not exceed 500 fibers, step (3) is repeatedly conducted to appropriately adjust the dilution ratio with pure water, and images are taken again to remeasure the fiber length.

Step (5): The length-weighted average fiber length lm = (Σli² × ni) / (Σli × ni), (Σni > 500), is determined from the fiber length of the fibrous fillers measured in step (4).
li: Fiber length of fibrous fillers
ni: Number of fibrous fillers having a fiber length of li

The second pellet is formed by a resin structure in which no fibrous fillers are contained but a second thermoplastic resin having a flow starting temperature lower than that of the first thermoplastic resin is contained.

The second pellet is obtained by, for example, pelletizing a mixture containing the second thermoplastic resin and other components formulated as needed by a melt extrusion molding method or a melt compression molding method.

Although examples of the shape of the second pellet include a columnar shape, a disk shape, an elliptical columnar shape, an elliptical disk shape, a Go stone shape, a spherical shape, and an indefinite shape, the shape is not limited to these. The shape is more preferably a cylindrical shape from the viewpoint of productivity and handling at the time of molding.

In the preparation method of an injection molded article of the present embodiment, the second thermoplastic resin having a flow starting temperature lower than that of the first thermoplastic resin is used.

The difference in the flow starting temperature between the second thermoplastic resin and the first thermoplastic resin is preferably 5°C or more, and more preferably 5°C to 40°C. Alternatively, the difference in the flow starting temperature between the second thermoplastic resin and the first pellet is preferably 5°C or more, and more preferably 5°C to 40°C.

Selecting such a second thermoplastic resin relative to the first thermoplastic resin allows the fibrous fillers to be appropriately dispersed as fiber bundles in an injection molded article, and the presence of the fibrous fillers as the fiber bundles during injection molding suppresses fiber breakage and allows long fibrous fillers to remain in the molded article, thereby making it easy to realize strength against an impact load.

The melt viscosity of the second thermoplastic resin at a melt-kneading temperature of the below-mentioned pellet mixture is preferably 5 Pa s to 500 Pa s (measurement conditions: nozzle hole diameter is 0.5 mm, and the shear rate is 1000 s⁻¹).

Examples of the second thermoplastic resin include liquid crystalline polyesters, polypropylenes, polyamides, polyesters other than liquid crystalline polyester resins, polysulfones, polyethersulfones, polyphenylenesulfides, polyetherketones, polyetheretherketones, polycarbonates, polyphenylene ethers, and polyetherimides.

One of the second thermoplastic resins may be used alone or at least two thereof may be used in combination.

A pellet mixture is obtained by mixing the above-mentioned first pellet and the second pellet.

The first pellet and the second pellet may be mixed such that the mixing ratio (mass ratio) of the first pellet to the second pellet realizes the formulation ratio of 40 parts by mass to 70 parts by mass of the thermoplastic resin to 30 parts by mass to 60 parts by mass of the fibrous fillers, when the mixture is made into an injection molded article.

For example, the mixing ratio (mass ratio) of both is preferably 50 parts by mass to 90 parts by mass of the first pellet to 10 parts by mass to 50 parts by mass of the second pellet, more preferably 55 parts by mass to 85 parts by mass of the first pellet to 15 parts by mass to 45 parts by mass of the second pellet, and even more preferably 55 parts by mass to 80 parts by mass of the first pellet to 20 parts by mass to 45 parts by mass of the second pellet.

The mixing ratio of the first pellet in the pellet mixture relative to 100% by mass of the pellet mixture is preferably 50% by mass to 90% by mass, more preferably 55% by mass to 85% by mass, and even more preferably 55% by mass to 80% by mass.

The mixing ratio of the second pellet in the pellet mixture relative to 100% by mass of the pellet mixture is preferably 10% by mass to 50% by mass, more preferably 15% by mass to 45% by mass, and even more preferably 20% by mass to 45% by mass.

It is preferable that the mixing ratio of the first pellet be 50% by mass to 90% by mass and the mixing ratio of the second pellet be 10% by mass to 50% by mass, relative to 100% by mass of the pellet mixture. It is more preferable that the mixing ratio of the first pellet be 55% by mass to 85% by mass and the mixing ratio of the second pellet be 15% by mass to 45% by mass, relative to 100% by mass of the pellet mixture. It is even more preferable that the mixing ratio of the first pellet be 55% by mass to 80% by mass and the mixing ratio of the second pellet be 20% by mass to 45% by mass, relative to 100% by mass of the pellet mixture.

The first pellet and the second pellet may be, for example, separately charged into a molding machine and then mixed in the molding machine, or alternatively, may be mixed in advance to prepare a mixture. Alternatively, the first pellet and the second pellet may be used as a coated product obtained by coating the surface of the first pellet with the second pellet.

### [Step of injection molding pellet mixture]

In the step of injection molding the pellet mixture in the present embodiment, the pellet mixture is melted using a conventionally-known injection molding machine, and the melted pellet mixture is injected into a mold to conduct molding, for example.

Examples of the conventionally-known injection molding machine include TR450EH3 manufactured by Sodick Co., Ltd., and a hydraulic horizontal molding machine manufactured by NISSEI PLASTIC INDUSTRIAL CO., LTD., under the model number of PS40E5ASE.

The injection molding temperature is appropriately determined depending on the type of thermoplastic resin, and the temperature of a cylinder of an injection molding machine is preferably set at a temperature higher than the flow starting temperature of the used thermoplastic resin by 10°C to 80°C.

For example, it is preferable that the melt-kneading temperature of the pellet mixture be more than the flow starting temperature of the second thermoplastic resin and no more than the flow starting temperature of the first thermoplastic resin or the first pellet.

The term "melt-kneading temperature of the pellet mixture" refers to the temperature at which the pellet mixture is melted or plasticized and kneaded, and specifically the temperature at the plasticization portion of the injection molding machine used to melt and soften the pellet mixture (melt-kneading temperature (plasticization portion)). More specifically, the melt-kneading temperature is preferably 260°C to 340°C, more preferably 280°C to 320°C, and even more preferably 290°C to 310°C. The temperature at a measuring unit or a plunger unit is preferably 280°C to 400°C, more preferably 290°C to 380°C, and even more preferably 300°C to 370°C.

The temperature of the mold is preferably set at room temperature (23°C, for example) to 180°C from the viewpoint of the cooling rate of the thermoplastic resin and the productivity.

Additional injection conditions such as screw rotation speed, back pressure, injection speed, holding pressure, or time of holding pressure may be appropriately adjusted.

The above-mentioned preparation method of the injection molded article of the present embodiment includes: a step of obtaining a pellet mixture by mixing the first pellet in which fibrous fillers are impregnated with the first thermoplastic resin and the second pellet having a flow starting temperature lower than the first thermoplastic resin and containing no fibrous fillers; and a step of injection molding the pellet mixture.

In the present embodiment, since the pellet mixture of the first pellet and the second pellet is used, the fibrous fillers are not excessively opened during the preparation of the injection molded article and are appropriately dispersed in the state of fiber bundles in the injection molded article finally obtained. Since the fibrous fillers are appropriately present in the state of fiber bundles in the injection molded article, fiber breakage is suppressed, and the fibrous fillers remaining in the molded article maintain the long length (the number of fibrous fillers having a fiber length of 1 mm or less is low and the vertical-horizontal plane area of a test piece after ashing becomes large). Thus, the preparation method of the present embodiment makes it possible to readily prepare an injection molded article having enhanced strength against an impact load.

The preparation method of an injection molded article of the present invention has the following aspects.

(51) A preparation method of the injection molded article of any one of (1) to (19) mentioned above, including:
a step of obtaining a pellet mixture by mixing: a first pellet in which fibrous fillers are impregnated with a first thermoplastic resin; and a second pellet which is free from fibrous fillers but contains a second thermoplastic resin having a flow starting temperature lower than that of the first thermoplastic resin; and
a step of injection molding the pellet mixture.

(52) The preparation method of an injection molded article according to (51) mentioned above, wherein the difference in the flow starting temperature between the first thermoplastic resin and the second thermoplastic resin is 5°C or more.

(53) The preparation method of an injection molded article according to (51) or (52) mentioned above, wherein the difference in the flow starting temperature between the first pellet and the second thermoplastic resin is 5°C or more.

(54) The preparation method of an injection molded article according to any one of (51) to (53) mentioned above, wherein the melt-kneading temperature of the pellet mixture is more than the flow starting temperature of the second thermoplastic resin and no more than the flow starting temperature of the first thermoplastic resin.

(55) The preparation method of an injection molded article according to any one of (51) to (54) mentioned above, wherein the melt-kneading temperature of the pellet mixture is more than the flow starting temperature of the second thermoplastic resin and no more than the flow starting temperature of the first pellet.

The above-mentioned injection molded article of the present embodiment can be generally applied to every application to which a thermoplastic resin can be applied, and is particularly suitable to application in the automobile field.

Examples of the application in the automobile field include: injection molded articles as automobile interior packaging materials, such as injection molded articles as ceiling materials, injection molded articles as wheel house cover materials, injection molded articles as trunk room lining materials, injection molded articles as instrument panel skin materials, injection molded articles as handle cover materials, injection molded articles as armrest materials, injection molded articles as headrest materials, injection molded articles as seat belt cover materials, injection molded articles as shift lever boot materials, injection molded articles as console box materials, injection molded articles as horn pad materials, injection molded articles as knob materials, injection molded articles as airbag cover materials, injection molded articles as various trim materials, injection molded articles as pillar materials, injection molded articles as door lock bezel materials, injection molded articles as grab box materials, injection molded articles as defroster nozzle materials, injection molded articles as scuff plate materials, injection molded articles as steering wheel materials, and injection molded articles as stearing column cover materials.

Additional examples of the application in the automobile field include: injection molded articles as automobile exterior packaging materials, such as injection molded articles as bumper materials, injection molded articles as spoiler materials, injection molded articles as mudguard materials, injection molded articles as side molding materials, injection molded articles as door mirror housing materials, and injection molded articles as underbody shield materials.

Examples of other injected molded articles as automobile part materials include injection molded articles as automobile head lamp materials, injection molded articles as glass run channel materials, injection molded articles as weather strip materials, injection molded articles as hose materials and injection molded articles as tube materials such as injection molded articles as drain hose materials and injection molded articles as window washer tube materials, injection molded articles as rack and pinion boot materials, injection molded articles as gasket materials, injection molded articles as bumper beam materials, injection molded articles as crash box materials, injection molded articles as various member materials, injection molded articles as suspension system materials, injection molded articles as front end module materials, injection molded articles as radiator support materials, and injection molded articles as back door inner materials.

In addition to the above applications, the injection molded article of the present embodiment may be applied to a sensor, an LED lamp, a connector, a socket, a resistor, a relay case, a switch, a coil bobbin, a capacitor, a variable capacitor case, an optical pickup, an oscillator, various terminal boards, a transformer, a plug, a printed circuit board, a tuner, a speaker, a microphone, a headphone, a small motor, a magnetic head base, a power module, a semiconductor, a liquid crystal display, a FDD carriage, a FDD chassi, a motor brush holder, a parabolic antenna, a computer-related part, a microwave part, an acousmato / voice equipment part, a lighting part, an air conditioner part, an office computer-related part, a telephone / FAX-related part, or a copy machine-related part.

### EXAMPLES

Hereinafter, the present invention will be explained in further detail with reference to specific examples. However, the present invention is not limited to the examples described below.

### [Flow starting temperature of thermoplastic resin]

A cylinder equipped with a die having a nozzle having an inner diameter of 1 mm and a length of 10 mm was filled with approximately 2 g of a thermoplastic resin using a flow tester (manufactured by Shimadzu Corporation under the model number of "CFT-500"). Then, the thermoplastic resin was melted and extruded from the nozzle while raising the temperature at a rate of 4°C/min under a load of 9.8 MPa (100 kg/cm²) to measure the temperature at which the viscosity became 4800 Pa·s (48000 poises) (flow starting temperature) as a flow starting temperature of the thermoplastic resin. The measurement results are shown in Tables 2 and 3.

### [Flow starting temperature of first pellet]

A first pellet was frozen and ground under predetermined conditions (pellet input amount: 5 g, preliminary freezing time: 10 minutes, and freezing and grinding time: 10 minutes) using a ball mill type freezer miller ("JFC-1500" manufactured by Japan Analytical Industry).

Then, the flow starting temperature of the first pellet was measured by the same method as that to measure the above-mentioned [flow starting temperature of thermoplastic resin] except that the frozen and ground first pellet was used instead of the thermoplastic resin. The measurement results are shown in Tables 2 and 3.

### <Preparation of prepellet>

Pre-pellets (1) to (5) obtained by processing thermoplastic resins were prepared, respectively.

### <<Preparation of pre-pellet (1)>>

The pre-pellet (1) (pellet LCP 1) was prepared as described below.

6-Hydroxy-2-naphthoic acid (1034.99 g, 5.5 mol), 2,6-naphthalenedicarboxylic acid (378.33 g, 1.75 mol), terephthalic acid (83.07 g, 0.5 mol), hydroquinone (272.52 g, 2.475 mol, in excess by 0.225 mol relative to the total amount of 2,6-naphthalenedicarboxylic acid and terephthalic acid), acetic anhydride (1226.87 g, 12 mol), and 1-methylimidazole (0.17 g) as a catalyst were charged into a reactor equipped with a stirrer, a torque meter, a nitrogen gas inlet tube, a thermometer and a reflux condenser, and the gas in the reactor was replaced with nitrogen gas, followed by raising the temperature therein from room temperature to 145°C over 15 minutes while stirring the mixture under a nitrogen gas stream to reflux the mixture at 145°C for 1 hour.

Then, the temperature was raised from 145°C to 310°C over 3.5 hours while distilling off acetic acid produced as a by-product and unreacted acetic anhydride, followed by maintaining the temperature at 310°C for 3 hours, and then the resultant was taken out to cool to room temperature.

The resultant solid product was pulverized with a pulverizer to obtain a particle size of approximately 0.1 mm to 1 mm, and the temperature thereof was raised under a nitrogen atmosphere from room temperature to 250°C over 1 hour, raised from 250°C to 295°C over 8 hours, and then maintained at 295°C for 6 hours to allow solid phase polymerization to proceed. After the solid phase polymerization, the resultant was cooled to obtain a powdered liquid crystalline polyester.

The thus obtained liquid crystalline polyester had 55% by mol of the repeating unit (1) in which Ar¹ was a 2,6-naphthylene group, 17.5% by mol of the repeating unit (2) in which Ar² was a 2,6-naphthylene group, 5% by mol of the repeating unit (2) in which Ar² was a 1,4-phenylene group, and 22.5% by mol of the repeating unit (3) in which Ar³ was a 1,4-phenylene group relative to the total amount of all repeating units, and had a flow starting temperature of 300°C.

Then, the resultant powdered liquid crystalline polyester was granulated with a twin-screw extruder (manufactured by IKG Corporation under the model number of PMT 47) at a cylinder temperature of 300°C to obtain the pre-pellet (1) (pellet LCP 1). The flow starting temperature of the prepared pellet LCP 1 was 294°C.

### «Preparation of pre-pellet (2)»

The pre-pellet (2) (pellet LCP 2) was prepared as described below.

6-Hydroxy-2-naphthoic acid (1034.99 g, 5.5 mol), 2,6-naphthalenedicarboxylic acid (378.33 g, 1.75 mol), terephthalic acid (83.07 g, 0.5 mol), hydroquinone (272.52 g, 2.475 mol, in excess by 0.225 mol relative to the total amount of 2,6-naphthalenedicarboxylic acid and terephthalic acid), acetic anhydride (1226.87 g, 12 mol), and 1-methylimidazole (0.17 g) as a catalyst were charged into a reactor equipped with a stirrer, a torque meter, a nitrogen gas inlet tube, a thermometer and a reflux condenser, the gas in the reactor was replaced with nitrogen gas and the temperature therein was raised from room temperature to 145°C over 15 minutes while stirring the mixture under a nitrogen gas stream to reflux the mixture at 145°C for 1 hour.

Then, the temperature was raised from 145°C to 310°C over 3.5 hours while distilling off acetic acid produced as a by-product and unreacted acetic anhydride, and then maintained at 310°C for 3 hours, followed by removing the resultant to cool to room temperature.

The resultant solid product was pulverized with a pulverizer to obtain a particle diameter of approximately 0.1 mm to 1 mm, followed by raising the temperature from room temperature to 250°C over 1 hour under a nitrogen atmosphere, raising the temperature from 250°C to 310°C over 10 hours and then maintaining the temperature at 310°C for 5 hours to allow solid phase polymerization to proceed. After the solid phase polymerization, the resultant was cooled to obtain a powdered liquid crystalline polyester.

The thus obtained liquid crystalline polyester had, relative to the total amount of all repeating units, 55% by mol of the repeating unit (1) in which Ar¹ was a 2,6-naphthylene group, 17.5% by mol of the repeating unit (2) in which Ar² was a 2,6-naphthylene group, 5% by mol of the repeating unit (2) in which Ar² was a 1,4-phenylene group, and 22.5% by mol of the repeating unit (3) in which Ar³ was a 1,4-phenylene group, and had a flow starting temperature of 322°C.

Then, the resultant powdered liquid crystalline polyester was granulated with a twin-screw extruder (manufactured by IKG Corporation under the model number of PMT 47) at a cylinder temperature of 320°C to obtain the pre-pellet (2) (pellet LCP 2). The flow starting temperature of the prepared pellet LCP 2 was 303°C.

### <<Preparation of pre-pellet (3)>>

The pre-pellet (3) (pellet LCP 3) was prepared as described below.

994.5 g (7.2 mol) of p-hydroxybenzoic acid, 446.9 g (2.4 mol) of 4,4'-dihydroxybiphenyl, 299.0 g (1.8 mol) of terephthalic acid, 99.7 g (0.6 mol) of isophthalic acid, and 1347.6 g (13.2 mol) of acetic anhydride were charged into a reactor equipped with a stirrer, a torque meter, a nitrogen gas inlet tube, a thermometer and a reflux condenser, and then 0.2 g of 1-methylimidazole was added thereto, followed by sufficiently replacing the gas in the reactor with nitrogen gas. Then, the temperature therein was raised from room temperature to 150°C over 30 minutes under a nitrogen gas stream and then maintained at 150°C to reflux the mixture for 1 hour.

Then, 0.9 g of 1-methylimidazole was added to the resultant, and the temperature thereof was raised from 150°C to 320°C over 2 hours 50 minutes while distilling off acetic acid produced as a by-product and unreacted acetic anhydride, and then the resultant was taken out at the end of the reaction when an increase in torque was observed, followed by cooling the resultant to room temperature.

The resultant solid product was pulverized with a pulverizer to obtain a particle diameter of approximately 0.1 mm to 1 mm, followed by raising the temperature from room temperature to 250°C over 1 hour under a nitrogen atmosphere, raising the temperature from 250°C to 285°C over 5 hours and then maintaining the temperature at 285°C for 3 hours to allow solid phase polymerization to proceed. After the solid phase polymerization, the resultant was cooled to obtain a powdered liquid crystalline polyester. The flow starting temperature of the resultant liquid crystalline polyester was 327°C.

Then, the resultant powdered liquid crystalline polyester was granulated with a twin-screw extruder (manufactured by IKG Corporation under the model number of PMT 47) at a cylinder temperature of 320°C to obtain the pre-pellet (3) (pellet LCP 3). The flow starting temperature of the prepared pellet LCP 3 was 316°C.

### «Preparation of pre-pellet (4)»

The pre-pellet (4) (pellet LCP 4) was prepared as described below.

994.5 g (7.2 mol) of p-hydroxybenzoic acid, 446.9 g (2.4 mol) of 4,4'-dihydroxybiphenyl, 239.2 g (1.44 mol) of terephthalic acid, 159.5 g (0.96 mol) of isophthalic acid, and 1347.6 g (13.2 mol) of acetic anhydride were charged into a reactor equipped with a stirrer, a torque meter, a nitrogen gas inlet tube, a thermometer and a reflux condenser, and then 0.2 g of 1-methylimidazole was added thereto, followed by sufficiently replacing the gas in the reactor with nitrogen gas. Then, the temperature therein was raised from room temperature to 150°C over 30 minutes under a nitrogen gas stream and then maintained at 150°C to reflux the mixture for 1 hour.

Then, 0.9 g of 1-methylimidazole was added to the resultant, and the temperature thereof was raised from 150°C to 320°C over 2 hours 50 minutes while distilling off acetic acid produced as a by-product and unreacted acetic anhydride, and then the resultant was taken out at the end of the reaction when an increase in torque was observed, followed by cooling the resultant to room temperature.

The resultant solid product was pulverized with a pulverizer to obtain a particle diameter of approximately 0.1 mm to 1 mm, followed by raising the temperature from room temperature to 220°C over 1 hour under a nitrogen atmosphere, raising the temperature from 220°C to 240°C over 0.5 hours and then maintaining the temperature at 240°C for 10 hours to allow solid phase polymerization to proceed. After the solid phase polymerization, the resultant was cooled to obtain a powdered liquid crystalline polyester. The flow starting temperature of the resultant liquid crystalline polyester was 291°C.

Then, the resultant powdered liquid crystalline polyester was granulated with a twin-screw extruder (manufactured by IKG Corporation under the model number of PMT 47) at a cylinder temperature of 290°C to obtain the pre-pellet (4) (pellet LCP 4). The flow starting temperature of the prepared pellet LCP 4 was 284°C.

### «Preparation of pre-pellet (5)»

The pre-pellet (5) (pellet LCP 5) was prepared as described below.

1207.3 g (8.74 mol) of 4-hydroxybenzoic acid, 608.4 g (3.23 mol) of 6-hydroxy-2-naphthoic acid, and 1345 g (13.2 mol) of acetic anhydride were charged into a polymerization tank of a 3-liter four-necked separable flask equipped with a Dimroth condenser, a nitrogen inlet tube, a distilling head equipped with a thermocouple configured to measure internal temperature, and an anchor-type stirring blade, the outside of the flask being equipped with another thermocouple. The outside temperature of the flask was raised to 150°C with a mantle heater under a nitrogen stream while stirring the mixture at 200 rpm to allow the acetylation reaction to proceed under reflux for about 3 hours. Following the acetylation reaction, the temperature was raised at 1°C/min and maintained at 310°C to allow the melt polycondensation to proceed. During this period, acetic acid produced as a by-product in the polycondensation reaction was continuously distilled off. Sampling was conducted 30 minutes after the temperature reached 310°C during the polymerization, and the flow starting temperature was measured to be 230°C. Stirring was stopped 35 minutes after the temperature reached 230°C, and the resultant was taken out to cool to room temperature. The resultant solid product was pulverized using a pulverizer to obtain a particle diameter of approximately 0.1 mm to 1 mm, followed by raising the temperature from room temperature to 180°C over 3 hours under a nitrogen atmosphere, maintaining the temperature at 180°C for 2 hours, further raising the temperature to 270°C over approximately 7.5 hours, and maintaining the temperature at 270°C for 5 hours to allow the solid phase polymerization to proceed. After the solid phase polymerization, the resultant was cooled to obtain a powdered liquid crystalline polyester. The flow starting temperature of the resultant liquid crystalline polyester was 287°C.

Then, the resultant powdered liquid crystalline polyester was granulated with a twin-screw extruder (manufactured by IKG Corporation under the model number of PMT 47) at a cylinder temperature of 280°C to obtain the pre-pellet (5) (pellet LCP 5). The flow starting temperature of the prepared pellet LCP 5 was 262°C.

### <Preparation of first pellet>

The first pellets (1) to (10) in which the fibrous filler was impregnated with the thermoplastic resin were prepared.

The first pellets (1) to (10) were prepared using the same preparation device as that shown in FIG. 2, as described below.

A GTS-40 type extruder (manufactured by PLABOR Research Laboratory of Plastics Technology Co., Ltd) was used as the extruder 120. EBD-1500A (manufactured by AIMEX CO., LTD.) was used as a belt type taking-up machine. The following glass fibers were used as fibrous fillers.

Fibrous filler: Glass fiber roving manufactured by Nitto Boseki Co., Ltd. (HME-glass, fiber diameter 17 µm, fineness 1100 g / 1000 m)

### Preparation of first pellet (1):

The pre-pellet (3) (pellet LCP 3) was used as a pre-pellet.

A resin structure 13 having 200 parts by mass of glass fiber bundle relative to 100 parts by mass of the pre-pellet (3) (pellet LCP 3) was obtained. Specifically, the resin structure 13 was prepared as described below.

### Step of obtaining resin structure:

A glass fiber bundle 11 was heated and dried at 150°C in a preheating unit 121 while continuously reeling out the glass fiber bundle 11 from a glass fiber roving 10 by operating the belt-type take-up machine (take-up unit 127) at a take-up speed of 10 m / min.

Then, the pre-pellet (3) in a molten state was supplied from an extruder 120 through a supply port 123a into a die (impregnation unit 123) attached to the tip of the extruder 120 while supplying the dried glass fiber bundle 11 thereinto. In the die (impregnation unit 123), the pre-pellet (3) was melted at 380°C to impregnate the glass fiber bundle 11 therewith to obtain the resin structure 13 having 200 parts by mass of the glass fiber bundle relative to 100 parts by mass of the pre-pellet (3) by adjusting the strand diameter using a die head having a nozzle diameter of 1.1 mm at an outlet of the die (impregnation unit 123).

In the thus obtained resin structure 13, glass fibers were arranged to be approximately parallel to the longitudinal direction of the first thermoplastic resin (LCP 3) layer.

Then, the resin structure 13 heated in the die (impregnation unit 123) was cooled to 150°C or lower in a cooling unit 125.

### Step of obtaining pellet:

Then, the cooled resin structure 13 was taken up in a strand shape by the belt-type taking-up machine (taking-up unit 127) to feed to a pelletizer (cutting unit 129), and cut to a predetermined length in the longitudinal direction thereof, thereby obtaining pellets 15 having a cylindrical shape (having a length of 12 mm).

The pellet 15 was cut in the longitudinal direction thereof, and the surface of the resultant section was observed with a microscope. As a result of the observation, it was confirmed that the arrangement direction of the glass fibers was approximately identical to the longitudinal direction of the pellet and approximately parallel to the longitudinal direction of the pellet.

Regarding the length of the glass fiber in the pellet, the length-weighted average fiber length was measured by the following steps.

Step (1): 2 g of the pellet was heated at 600°C for 4 hours in a muffle furnace to remove the resin component.

Step (2): The resultant obtained by removing the resin component from the pellets was dispersed in 1000 mL of an aqueous solution containing 0.05% by volume of a surfactant (Micro-90 manufactured by INTERNATIONAL PRODUCTS CORPORATION) to obtain a dispersion liquid.

Step (3): 100 mL was taken from the dispersion liquid, and diluted 10 times with pure water. 50 mL was taken from the diluted dispersion liquid, and dispersed in a petri dish, and glass fibers dispersed in the petri dish were observed with a microscope (VH-Z25, manufactured by KEYENCE CORPORATION at a magnification of 10×) to take 10 images per sample without overlaps of taken areas.

Step (4): The length of all fibers present in each taken image was measured by a measurement tool of the microscope. The length of bent fibers was measured by multiple-point measurement and the length of fibers contacting with edges of the image was not measured. The same procedure was repeated for the 10 taken images to measure the fiber length until the total number of measured fibers exceeded 500 fibers.

Step (5): The length-weighted average fiber length lm = (Σli² × ni) / (Σli × ni), (Σni > 500), was determined from the fiber length of the glass fibers measured in step (4).
li: Fiber length of glass fibers
ni: Number of glass fibers having a fiber length of li

As a result, the length-weighted average fiber length of the glass fibers was the same as the length of the pellet (12 mm).

### Preparation of first pellet (2):

The pre-pellet (3) (pellet LCP 3) was used as the pre-pellet.

A resin structure 13 having 192.3 parts by mass of glass fiber bundles relative to 100 parts by mass of the pre-pellet (3) (pellet LCP 3) was obtained.

Pellets 15 having a cylindrical shape (having a length of 12 mm) were obtained by the same method as that to obtain the first pellet (1) except for the above-mentioned matters.

### Preparation of first pellet (3):

A resin structure 13 having 97.1 parts by mass of glass fiber bundles relative to 100 parts by mass of the pre-pellet (2) (pellet LCP 2) was obtained by using the pre-pellet (2) (pellet LCP 2) as the pre-pellet and adjusting the strand diameter using a die head having a nozzle diameter of 1.5 mm.

Pellets 15 having a cylindrical shape (having a length of 12 mm) were obtained by the same method as that to obtain the first pellet (1) except for the above-mentioned matters.

### Preparation of first pellet (4):

The pre-pellet (2) (pellet LCP 2) was used as the pre-pellet.

A resin structure 13 having 200 parts by mass of glass fiber bundles relative to 100 parts by mass of the pre-pellet (2) (pellet LCP 2) was obtained.

Pellets 15 having a cylindrical shape (having a length of 12 mm) were obtained by the same method as that to obtain the first pellet (1) except for the above-mentioned matters.

### Preparation of first pellet (5):

The pre-pellet (2) (pellet LCP 2) was used as the pre-pellet.

A resin structure 13 having 200 parts by mass of glass fiber bundles relative to 100 parts by mass of the pre-pellet (2) (pellet LCP 2) was obtained.

Pellets 15 having a cylindrical shape (having a length of 20 mm) were obtained by the same method as that to obtain the first pellet (1) except for the above-mentioned matters.

### Preparation of first pellet (6):

A resin structure 13 having 95.2 parts by mass of glass fiber bundles relative to 100 parts by mass of the pre-pellet (2) (pellet LCP 2) was obtained by using the pre-pellet (2) (pellet LCP 2) as the pre-pellet and adjusting the strand diameter using a die head having a nozzle diameter of 1.5 mm.

Pellets 15 having a cylindrical shape (having a length of 12 mm) were obtained by the same method as that to obtain the first pellet (1) except for the above-mentioned matters.

### Preparation of first pellet (7):

A resin structure 13 having 58.7 parts by mass of glass fiber bundles relative to 100 parts by mass of the pre-pellet (4) (pellet LCP 4) was obtained by using the pre-pellet (4) (pellet LCP 4) as the pre-pellet and adjusting the strand diameter using a die head having a nozzle diameter of 2.0 mm.

Pellets 15 having a cylindrical shape (having a length of 12 mm) were obtained by the same method as that to obtain the first pellet (1) except for the above-mentioned matters.

### Preparation of first pellet (8):

A resin structure 13 having 58.7 parts by mass of glass fiber bundles relative to 100 parts by mass of the pre-pellet (2) (pellet LCP 2) was obtained by using the pre-pellet (2) (pellet LCP 2) as the pre-pellet and adjusting the strand diameter using a die head having a nozzle diameter of 2.0 mm.

Pellets 15 having a cylindrical shape (having a length of 12 mm) were obtained by the same method as that to obtain the first pellet (1) except for the above-mentioned matters.

### Preparation of first pellet (9):

A resin structure 13 having 58.7 parts by mass of glass fiber bundles relative to 100 parts by mass of the pre-pellet (1) (pellet LCP 1) was obtained by using the pre-pellet (1) (pellet LCP 1) as the pre-pellet and adjusting the strand diameter using a die head having a nozzle diameter of 2.0 mm.

Pellets 15 having a cylindrical shape (having a length of 12 mm) were obtained by the same method as that to obtain the first pellet (1) except for the above-mentioned matters.

### Preparation of first pellet (10):

A resin structure 13 having 92.3 parts by mass of glass fiber bundles relative to 100 parts by mass of the pre-pellet (5) (pellet LCP 5) was obtained by using the pre-pellet (5) (pellet LCP 5) as the pre-pellet and adjusting the strand diameter using a die head having a nozzle diameter of 1.5 mm.

Pellets 15 having a cylindrical shape (having a length of 12 mm) were obtained by the same method as that to obtain the first pellet (1) except for the above-mentioned matters.

### <Preparation of second pellet>

Second pellets (1) and (2) in which no fibrous fillers were contained and a thermoplastic resin was contained were prepared.

The pre-pellet (4) (pellet LCP 4) was used directly as the second pellet (1).

The pre-pellet (1) (pellet LCP 1) was used directly as the second pellet (2).

The constitution of the first pellets (1) to (10), the length of the pellets, and the constitution of the second pellets (1) and (2) are shown in Table 1.

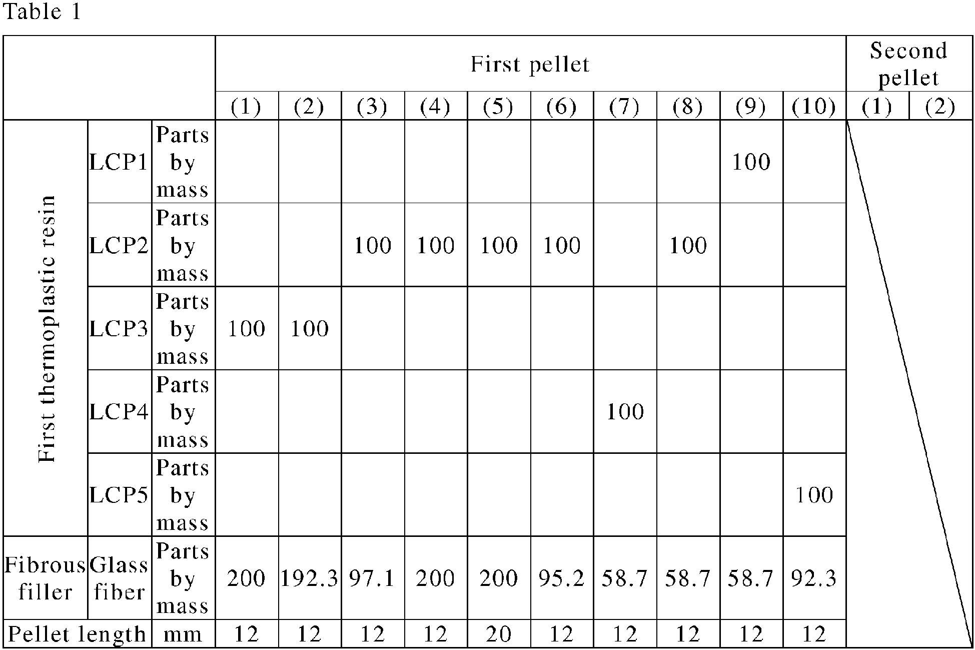

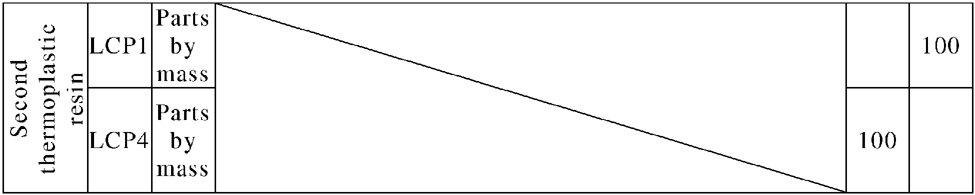

### <Preparation of injection molded article>

An injection molded article of each example was prepared by a step of obtaining a pellet mixture by mixing the first pellet, the second pellet, and a measurement stabilizer, and a step of injection molding the pellet mixture.

### (Example 1)

### Step of obtaining pellet mixture:

The first pellet (1) and the second pellet (1) prepared as mentioned above were mixed at a ratio shown in Table 2, and then 0.04 parts by mass of CS-7 (calcium behenate, manufactured by NITTO CHEMICAL INDUSTRY CO., LTD.) was added as the measurement stabilizer relative to 100 parts by mass of the mixture composed of the first pellet (1) and the second pellet (1) and then mixed uniformly to obtain a pellet mixture.

### Step of injection molding pellet mixture:

The pellet mixture was put into a hopper of an injection molding machine TR450EH3 (manufactured by Sodick Co., Ltd.). The pellet mixture was melt-kneaded in the injection molding machine in which the temperature at the plasticization portion (namely, melt-kneading temperature) was set at 300°C, and then injected into a mold set at a mold temperature of 100°C at an injection speed of 20 mm/second, to prepare a multipurpose test piece (type A1) (having a thickness of 4 mm) conforming to JIS K7139. The gate was a film gate having a thickness of 4 mm from the upper side of the grip portion on one side of the multipurpose test piece.

Additional injection conditions: The temperature of the plunger was set at 360°C, the screw rotation speed (plasticization portion) was set at 100 rpm, the back pressure was set at 0 MPa, the holding pressure was set at 100 MPa, and the time of holding pressure was set at 5 seconds

### (Example 2)

A multipurpose test piece (type A1) (having a thickness of 4 mm) conforming to JIS K7139 was prepared by the same method as that to prepare the injection molded article in Example 1 except that the first pellet (2) and the second pellet (1) were used together, and the mixing ratio of the pellet mixture was changed.

### (Example 3)

A multipurpose test piece (type A1) (having a thickness of 4 mm) conforming to JIS K7139 was prepared by the same method as that to prepare the injection molded article in Example 1 except that the first pellet (3) and the second pellet (1) were used together, and the mixing ratio of the pellet mixture was changed.

### (Example 4)

A multipurpose test piece (type A1) (having a thickness of 4 mm) conforming to JIS K7139 was prepared by the same method as that to prepare the injection molded article in Example 1 except that the first pellet (4) and the second pellet (2) were used together.

### (Example 5)

A multipurpose test piece (type A1) (having a thickness of 4 mm) conforming to JIS K7139 was prepared by the same method as that to prepare the injection molded article in Example 1 except that the first pellet (5) and the second pellet (2) were used together.

### (Comparative Example 1)

A multipurpose test piece (type A1) (having a thickness of 4 mm) conforming to JIS K7139 was prepared by the same method as that to prepare the injection molded article in Example 1 except that the temperature at the plasticization portion (namely, melt-kneading temperature) was changed.

### (Comparative Example 2)

A multipurpose test piece (type A1) (having a thickness of 4 mm) conforming to JIS K7139 was prepared by the same method as that to prepare the injection molded article in Example 1 except that the first pellet (6) and the second pellet (2) were used together, the mixing ratio of the pellet mixture was changed, and the temperature at the plasticization portion (namely, melt-kneading temperature) was changed.

### (Comparative Example 3)

A multipurpose test piece (type A1) (having a thickness of 4 mm) conforming to JIS K7139 was prepared by the same method as that to prepare the injection molded article in Example 3 except that the temperature at the plasticization portion (namely, melt-kneading temperature) was changed.

### (Comparative Example 4)

A multipurpose test piece (type A1) (having a thickness of 4 mm) conforming to JIS K7139 was prepared by the same method as that to prepare the injection molded article in Example 5 except that the temperature at the plasticization portion (namely, melt-kneading temperature) was changed.

### (Comparative Example 5)

A multipurpose test piece (type A1) (having a thickness of 4 mm) conforming to JIS K7139 was prepared by the same method as that to prepare the injection molded article in Example 1 except that none of the second pellets were formulated, only the first pellet (7) was formulated, and the temperature at the plasticization portion (namely, melt-kneading temperature) was changed.

### (Comparative Example 6)

A multipurpose test piece (type A1) (having a thickness of 4 mm) conforming to JIS K7139 was prepared by the same method as that to prepare the injection molded article in Example 1 except that none of the second pellets were formulated, only the first pellet (8) was formulated, and the temperature at the plasticization portion (namely, melt-kneading temperature) was changed.

### (Comparative Example 7)

A multipurpose test piece (type A1) (having a thickness of 4 mm) conforming to JIS K7139 was prepared by the same method as that to prepare the injection molded article in Example 1 except that none of the second pellets were formulated, only the first pellet (9) was formulated, and the temperature at the plasticization portion (namely, melt-kneading temperature) was changed.

### (Comparative Example 8)

A multipurpose test piece (type A1) (having a thickness of 4 mm) conforming to JIS K7139 was prepared by the same method as that to prepare the injection molded article in Example 1 except that none of the second pellets were formulated, only the first pellet (10) was formulated, and the temperature at the plasticization portion (namely, melt-kneading temperature) was changed.

Each injection molded article (multipurpose test piece (type A1) (having a thickness of 4 mm)) in each example was subjected to measurement of the length-weighted average fiber length of fibrous fillers therein, the ratio of fibrous fillers having a fiber length of 1 mm or less therein, the ratio of fibrous fillers having a fiber length of more than 5 mm therein, ashing test, and the expansion coefficient of the test piece in the thickness-direction after ashing as described below, respectively. The measurement results are shown in Tables 2 and 3.

[Measurement of the fiber length and the length-weighted average fiber length of fibrous fillers in the injection molded article]

Step (1): A test piece having a width of 10 mm, a length of 30 mm and a thickness of 4 mm was cut from the midportion of a multipurpose test piece (type A1) (having a thickness of 4 mm), and heated in a muffle furnace at 600°C for 4 hours to remove the resin component.

Step (2): The resultant obtained by removing the resin component from the test piece was dispersed in 1000 mL of an aqueous solution containing 0.05% by volume of a surfactant (Micro-90 manufactured by INTERNATIONAL PRODUCTS CORPORATION) to obtain a dispersion liquid.

Step (3): 100 mL was taken from the dispersion liquid, and diluted 10 times with pure water. 50 mL was taken from the diluted dispersion liquid and dispersed in a petri dish, and then glass fibers dispersed in the petri dish were observed with a microscope (VH-ZST manufactured by KEYENCE CORPORATION at a magnification of 20×) to take 10 images per sample without overlaps of taken areas.

Step (4): The length of all fibers present in each taken image was measured by a measurement tool of the microscope. The length of bent fibers was measured by multiple-point measurement. The same procedure was repeated for the 10 taken images to measure the fiber length until the total number of measured fibers exceeded 500 fibers.

Step (5): The length-weighted average fiber length lm = (Σli² × ni) / (Σli × ni), (Σni > 500), was determined from the fiber length of the glass fibers measured in step (4).
li: Fiber length of glass fibers
ni: Number of glass fibers having a fiber length of li

[Measurement of the ratio of fibrous fillers having a fiber length of 1 mm or less in the injection molded article]

The total fiber length of fibers having a fiber length of 1 mm or less, measured in step (4), was divided by the total fiber length of the fibers to obtain the ratio of fibrous fillers having a fiber length of 1 mm or less relative to the total amount of the fibrous fillers in the injection molded article.

### [Measurement of the ratio of fibrous fillers having a fiber length of more than 5 mm in the injection molded article]

The total fiber length of fibers having a fiber length of more than 5 mm, measured in step (4), was divided by the total fiber length of the fibers to obtain the ratio of fibrous fillers having a fiber length of more than 5 mm relative to the total amount of the fibrous fillers in the injection molded article.

### [Ashing test]

Step (1): A cuboid test piece having a vertical size of 10 mm, a horizontal size of 10 mm and a thickness of 4 mm (the vertical-horizontal plane area of the test piece before ashing was 100 mm²) was cut from an injection molded article (a multipurpose test piece (type A1) (having a thickness of 4 mm)).

Step (2): The test piece was subjected to a heating treatment (ashing) at 600°C to remove the resin component completely.

Step (3): The test piece after ashing was placed so that the vertical-horizontal plane of the test piece after ashing could correspond to the vertical-horizontal plane of the test piece before ashing to determine the vertical-horizontal plane area of the test piece after ashing using image analysis software. Image-processing software (WinROOF 2018, manufactured by MITANI. WORK) was used as the image analysis software. As for the binarization condition, threshold values were set such that the contour of the test piece after ashing was identified by the binarization command with two threshold values. In addition, when the contour of an object other than the test piece, such as the scale display in the image, was misidentified, the object was deleted after binarization.

The vertical-horizontal plane area of the test piece after ashing was divided by the vertical-horizontal plane area, 100 mm², of the test piece before ashing to obtain the area ratio of the area after ashing to the area before ashing, "after ashing / before ashing".

### [Measurement of expansion coefficient in the thickness-direction of a test piece after ashing]

The expansion coefficient in the thickness-direction of a test piece after ashing was calculated by the following equation.

Expansion coefficient in the thickness-direction of a test piece after ashing = the thickness at the thickest portion in the test piece after ashing / the thickness of the test piece before ashing

### <Evaluation of injection molded article>

Each injection molded article in each example was subjected to the Charpy impact test described below to measure the Charpy impact strength and evaluate the strength against an impact load. The measurement results are shown in Tables 2 and 3.

### Charpy impact test:

An unnotched test piece having a width of 10 mm, a length of 80 mm and a thickness of 4 mm was cut from each injection molded article (multipurpose test piece (type A1) (having a thickness of 4 mm) in each example.

The unnotched test piece was notched with a 45° V-shaped groove (notch tip radius: 0.25 mm ± 0.05 mm) having a depth of 2 mm in accordance with ISO 2818 and JIS K7144. A notching tool (manufactured by TOYO SEIKI CO., LTD., under the model number of A-4) was used to conduct notching.

The Charpy impact test was conducted by using the notched test piece and adopting hammers 2.0 J, 4.0 J, and 7.5 J, in accordance with ISO179-1 and JIS K7111-1. The average value of 5 measurements was adopted as the Charpy impact strength of the notched test piece.

**Table 2**

| | | | Example 1 | Example 2 | Example 3 | Example 4 | Example 5 |
|---|---|---|---|---|---|---|---|
| First pellet | (1) [LCP3/GF] | Parts by mass | 60 [20/40] | | | | |
| | (2) [LCP3/GF] | Parts by mass | | 76 [26/50] | | | |
| | (3) [LCP2/GF] | Parts by mass | | | 67 [34/33] | | |
| | (4) [LCP2/GF] | Parts by mass | | | | 60 [20/40] | |
| | (5) [LCP2/GF] | Parts by mass | | | | | 60 [20/40] |
| Second pellet | (1) LCP4 | Parts by mass | 40 | 24 | | | |
| | (2) LCP1 | Parts by mass | | | 33 | 40 | 40 |
| Melt-kneading temperature | Plasticization portion | °C | 300 | 300 | 300 | 300 | 300 |
| Flow starting temperature of first thermoplastic resin | | °C | 316 | 316 | 303 | 303 | 303 |
| Flow starting temperature of first pellet | | °C | 317 | 317 | 300 | 304 | 304 |
| Flow starting temperature of second thermoplastic resin | | °C | 284 | 284 | 294 | 294 | 294 |
| Length-weighted average fiber length of fibrous filler | | mm | 5.7 | 5.3 | 6.3 | 5.7 | 9.3 |
| Ratio of fibers having fiber length of 1 mm or less | | % by mass | 10.6 | 19.2 | 7.0 | 8.7 | 3.0 |
| Ratio of fibers having fiber length of longer than 5 mm | | % by mass | 56.1 | 47.3 | 57.6 | 54.7 | 76.5 |
| Vertical-horizontal plane area of test piece after ashing | | mm² | 394 | 574 | 443 | 519 | 950 |
| After ashing / Before ashing | | Area ratio | 3.9 | 5.7 | 4.4 | 5.2 | 9.5 |
| Expansion coefficient in thickness-direction of test piece after ashing | | - | 3.6 | 5.4 | 2.9 | 4.1 | 4.0 |
| Charpy impact strength | Notched | kJ/cm² | 86 | 93 | 79 | 85 | 93 |

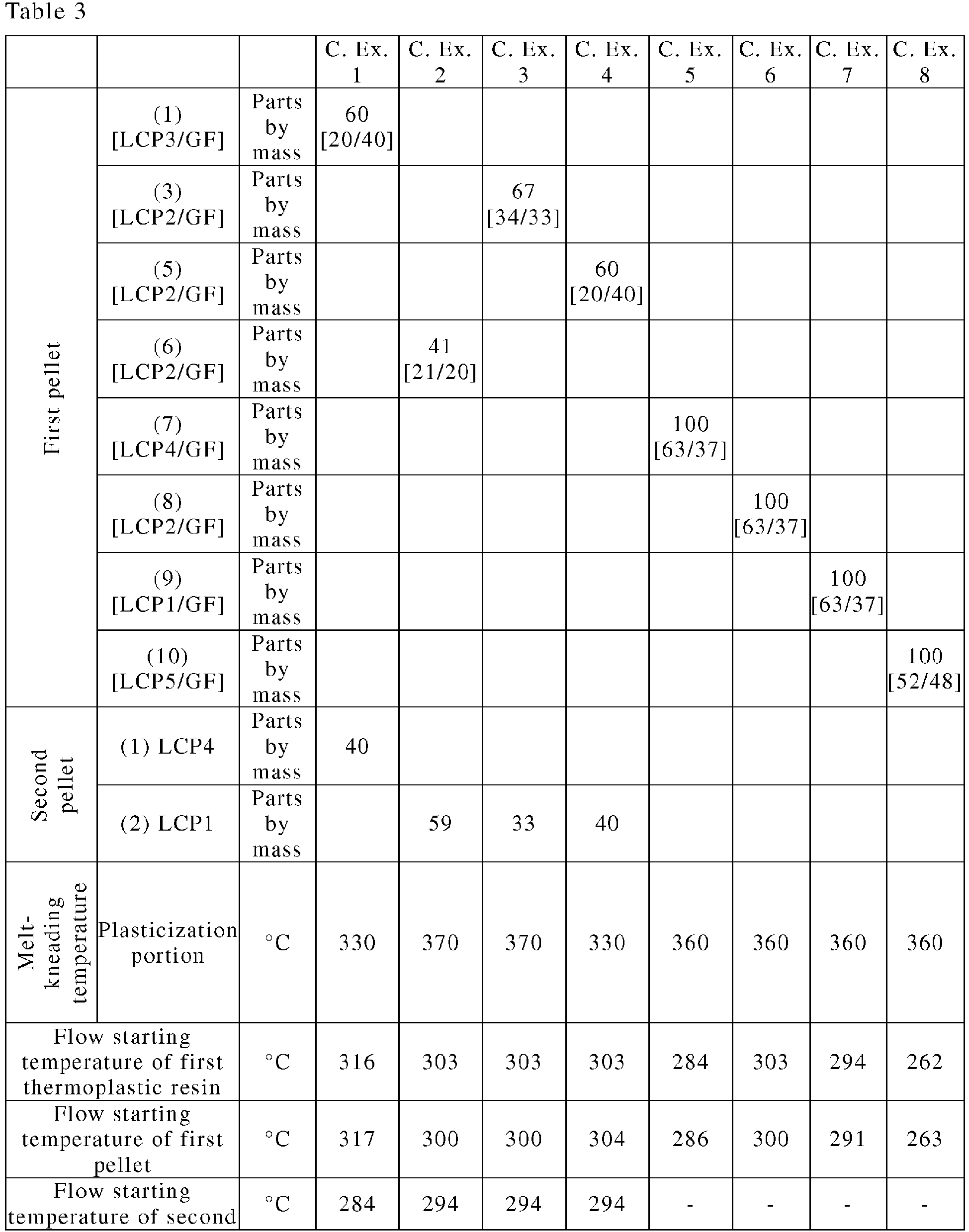

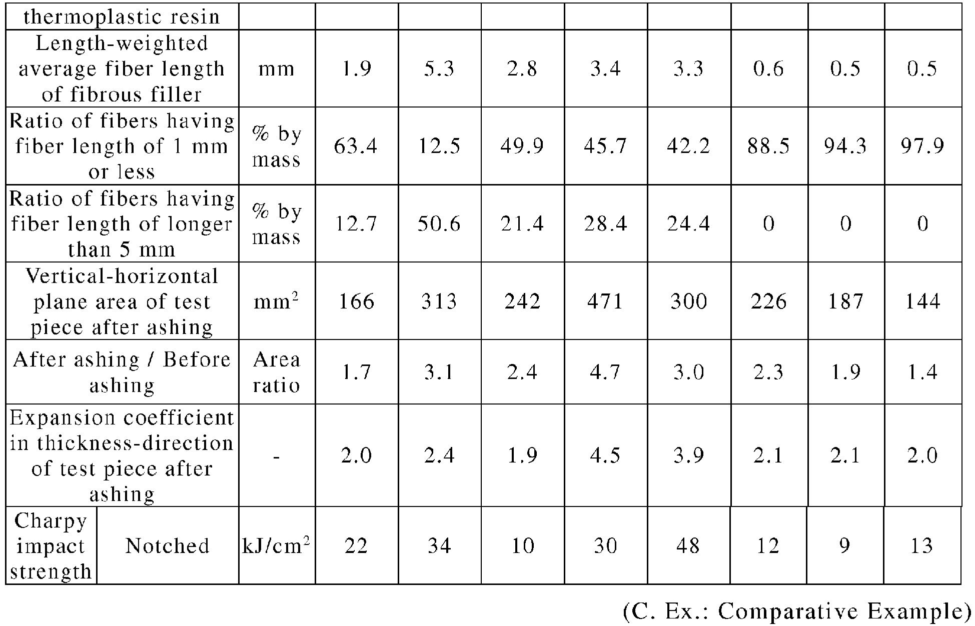

In FIG. 1 showing the test pieces after the ashing test, FIG. 1 (A) shows the injection molded article of Example 1, and FIG. 1 (B) shows the injection-molded article of Comparative Example 3.

Fig. 1(A): The injection molded article of Example 1 was in the state in which the test piece after ashing contained fiber bundles. The vertical-horizontal plane area of the test piece after ashing in the "ashing test" was 3.9 times the vertical-horizontal plane area (100 mm²) of the test piece before ashing.

Fig. 1(B): The injection molded article of Comparative Example 3 was in the state in which the test piece after ashing contained almost no fiber bundles. The vertical-horizontal plane area of the test piece after ashing in the "ashing test" was 2.4 times the vertical-horizontal plane area (100 mm²) of the test piece before ashing.

It can be confirmed from the results shown in Tables 2 and 3 that each injection molded article of Examples 1 to 5 according to the present invention had a larger charpy impact strength and a larger strength against an impact load than those of each injection molded article of Comparative Examples 1 to 8.

It can be confirmed from the results shown in Tables 2 and 3 that, relative to the effect on the improvement in the strength by applying the present invention, the effect on the expansion coefficient in the thickness-direction of the test piece after ashing was small, but the contribution to the ratio of the fibrous fillers having a fiber length of 1 mm or less and the specific area ratio of before and after ashing was large.

### EXPLANATION OF REFERENCE NUMERALS

- 100: Preparation device
- 101 to 109: Transfer rolls
- 120: Extruder
- 121: Preheating unit
- 123: Impregnation unit
- 125: Cooling unit
- 127: Taking-up unit
- 129: Cutting unit

## Claims

1. An injection molded article comprising a thermoplastic resin and fibrous fillers, wherein
the thermoplastic resin comprises at least 10% by mass of at least one selected from the group consisting of polypropylenes and liquid crystalline polyesters, relative to a total amount of the thermoplastic resin,
a ratio of fibrous fillers having a fiber length of 1 mm or less relative to a total amount of the fibrous fillers in the injection molded article is 40% by mass or less,
a vertical-horizontal plane area of a test piece after ashing in an ashing test is at least 3.5 times a vertical-horizontal plane area of the test piece before ashing:
the ashing test being conducted by:
step (1) in which the test piece having a vertical size of 10 mm and a horizontal size of 10 mm (the vertical-horizontal plane area of the test piece before ashing is 100 mm²) is cut from the injection molded article;
step (2) in which the test piece is subjected to a heating treatment (ashing) to remove a resin component completely; and
step (3) in which the test piece after ashing is placed so that a vertical-horizontal plane of the test piece after ashing can correspond to a vertical-horizontal plane of the test piece before ashing to determine the vertical-horizontal plane area of the test piece after ashing using an image analysis software.

2. The injection molded article according to claim 1, wherein a ratio of fibrous fillers having a fiber length of more than 5 mm in the injection molded article relative to the total amount of the fibrous fillers is 30% by mass or more.

3. The injection molded article according to claim 1 or 2, wherein a length-weighted average fiber length of the fibrous fillers is 4 mm or more.

4. The injection molded article according to any one of claims 1 to 3, wherein 40 parts by mass to 70 parts by mass of the thermoplastic resin and 30 parts by mass to 60 parts by mass of the fibrous filler are contained.

5. The injection molded article according to any one of claims 1 to 4, wherein the fibrous fillers are glass fibers.
